(19) Europäisches Patentamt
European Patent Office
Office européen des brevets

(11) **EP 3 840 092 A1**

(12) **EUROPEAN PATENT APPLICATION**

(43) Date of publication:
**23.06.2021 Bulletin 2021/25**

(21) Application number: **20215691.5**

(22) Date of filing: **18.12.2020**

(51) Int Cl.:
*H01M 4/62* *(2006.01)*          *H01M 10/06* *(2006.01)*
*H01M 10/08* *(2006.01)*          *H01M 50/463* *(2021.01)*
*H01M 4/02* *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **20.12.2019 JP 2019230775**

(71) Applicant: **GS Yuasa International Ltd.
Kisshoin, Minami-ku,
Kyoto-shi, Kyoto 601-8520 (JP)**

(72) Inventor: **SAKATA, Wataru
Kyoto-shi, Kyoto, 601-8520 (JP)**

(74) Representative: **Isarpatent
Patent- und Rechtsanwälte Behnisch Barth Charles
Hassa Peckmann & Partner mbB
Friedrichstrasse 31
80801 München (DE)**

(54) **LEAD-ACID BATTERY**

(57)      A lead-acid battery including a positive electrode plate, a negative electrode plate, an electrolyte solution, a separator interposed between the positive electrode plate and the negative electrode plate, in which the negative electrode plate includes a negative electrode current collector and a negative electrode material, the negative electrode material has a density of 3.5 g/cm³ or less, the negative electrode material contains an organic condensate, and the separator has a first rib on a first surface on a positive electrode plate side and a second rib on a second surface on a negative electrode plate side.

**EP 3 840 092 A1**

**Description**

FIELD

The present invention relates to a lead-acid battery.

BACKGROUND

Lead-acid batteries are used in various applications such as an in-vehicle application and an industrial application. The lead-acid battery includes a positive electrode plate, a negative electrode plate, a separator interposed between the positive electrode plate and the negative electrode plate, and an electrolyte solution.

In the lead-acid battery, a stratification occurs in which the specific gravity of the electrolyte solution (hereinafter, also referred to as an upper electrolyte solution) in the upper part of the container becomes low and the specific gravity of the electrolyte solution (hereinafter, also referred to as a lower electrolyte solution) in the lower part becomes high. When the stratification occurs, sulfation proceeds at the lower part of the negative electrode plate. In the upper electrolyte solution having a low specific gravity, penetration short circuit is likely to occur in which the solubility of lead sulfate becomes high, the amount of lead ions in the electrolyte solution increases, and the lead reduced and separated in the negative electrode plate penetrates into the pores of the separator and reaches the positive electrode plate.

JP 2017-63001A proposes a lead-acid battery including an element in which a positive electrode plate and a negative electrode plate are laminated with a separator interposed therebetween, an electrolyte solution, and a container containing the element. The length A between the outer ends of the lugs at both ends directly below the negative electrode strap connecting the lugs of the negative electrode plate and the length A' between the outer ends of the lugs at both ends directly below the positive electrode strap connecting the lugs of the positive electrode plate are smaller than the lengths B and B' between the outer ends of the upper frame bone parts in the stacking direction of the plates located at both ends of the plates connected to the straps, respectively. The separator has ribs in a region facing the upper part of the positive electrode plate and a region facing the upper part of the negative electrode plate. In the example of JP 2017-63001A, a battery including a positive electrode plate and a negative electrode plate having a width of 100 mm and a height of 110 mm is manufactured.

In general, as a method of suppressing stratification of an electrolyte solution of a lead-acid battery and improving a capacity retention ratio, gas is generated by overcharging the lead-acid battery, and the gas causes the electrolyte solution to flow. However, when the utilization factor of lead increases by reducing the amount of lead used in the negative electrode material and reducing the negative electrode material density, it is difficult to improve the capacity retention ratio. This is because when the negative electrode material density is reduced, expansion of the negative electrode material becomes severe due to repeated charge-discharge, and as the negative electrode material falls off significantly, "gas stagnation" in which gas stays between the positive electrode plate and the negative electrode plate becomes severe, whereby the stratification of the electrolyte solution progresses, and the effective plate area tends to decrease.

SUMMARY

An aspect of the present invention relates to a lead-acid battery including a positive electrode plate, a negative electrode plate, an electrolyte solution, a separator interposed between the positive electrode plate and the negative electrode plate, wherein the negative electrode plate includes a negative electrode current collector and a negative electrode material, the negative electrode material has a density of 3.5 g/cm$^3$ or less, the negative electrode material contains an organic expander other than a lignin, and the separator has a first rib on a first surface on a positive electrode plate side and a second rib on a second surface on a negative electrode plate side.

BRIEF DESCRIPTION OF DRAWINGS

FIG. 1 is a perspective view schematically showing a state in which a lid of a lead-acid battery according to an embodiment of the present invention is removed.
FIG. 2A is a front view of the lead-acid battery of FIG. 1.
FIG. 2B is an aligned section view taken along line IIB-IIB of the lead-acid battery of FIG. 2A.
FIG. 3 is a view showing the relation between the number of cycles of batteries R1 to R3 and a capacity retention ratio.
FIG. 4 is a view showing the relation between the number of cycles of batteries R1, R2, and R4 and the capacity retention ratio.
FIG. 5 is a view showing the relation between the number of cycles of batteries R1, R2, and E1 and the capacity retention ratio.

FIG. 6 is a view showing the relation between a battery configuration and a self discharge rate.

FIG. 7 is a view showing low-temperature high-rate discharge performance of batteries R2 to R4 and E1 in the initial stage and at 300 cycles.

FIG. 8 is a view showing low-temperature high-rate discharge performance of batteries R1 and R5 to R7 in the initial stage and at 300 cycles.

FIG. 9 is a view showing the relation between a negative electrode material density (batteries E1 to E4 and R7) and an improvement range of a rate of decrease in low-temperature high-rate discharge performance at 300 cycles with respect to the initial stage.

FIG. 10 is a view showing the relation between a content of an organic expander in a negative electrode material and the capacity retention ratio at 300 cycles.

FIG. 11 is a view showing the relation between the content of the organic expander in the negative electrode material and the initial capacity.

FIG. 12 is a view showing the relation between a height H of the plate, an effective plate area S' at the 200th cycle, and an actual plate area S (height of the plate × width of the plate).

FIG. 13 is a view showing a comparison of capacity retention ratios of batteries R1, R13, and R7 at the 100th cycle and at the 200th cycle.

FIG. 14 is a view showing the relation between the height of the plate and the capacity retention ratio at the 200th cycle.

FIG. 15 is a view showing the relation between the height of the plate and the improvement range of the capacity retention ratio in comparison.

FIG. 16 is a view showing the relation between the height of the plate and an amount of lead sulfate accumulated in upper, middle and lower parts of the negative electrode plate after 600 cycles.

FIG. 17 is a view showing the relation between a distance between electrodes and an amount of gas stagnation when the height of the plate is 278 mm.

FIG. 18 is a view showing the relation between the distance between the electrodes and the amount of the gas stagnation when the height of the plate is 115 mm.

FIG. 19 is a view showing the relation between the distance between the electrodes and the amount of the gas stagnation when the height of the plate is 384 mm.

FIG. 20 is a view showing the relation between the distance between the electrodes and low-temperature high-rate discharge performance.

FIG. 21 is a view showing the relation between a height H of the plate, an effective plate area S', and an actual plate area S (height of the plate × width of the plate) when a condensate A is used.

FIG. 22 is a view showing the relation between the height of the plate and the capacity retention ratio at the 200th cycle when the condensate A is used.

FIG. 23 is a view showing the relation between the height of the plate when the condensate A is used and the improvement range of the capacity retention ratio when a separator has ribs on both sides with respect to a case in which the separator has the rib only on a positive electrode plate side.

FIG. 24 is a view showing the relation between a height H of the plate, an effective plate area S', and an actual plate area S (height of the plate × width of the plate) when a condensate B is used.

FIG. 25 is a view showing the relation between the height of the plate and the capacity retention ratio at the 200th cycle when the condensate B is used.

FIG. 26 is a view showing the relation between the height of the plate when the condensate B is used and the improvement range of the capacity retention ratio when the separator has ribs on both sides with respect to the case in which the separator has the rib only on the positive electrode plate side.

FIG. 27 is a view showing the relation between a height H of the plate, an effective plate area S', and an actual plate area S (height of the plate × width of the plate) when a condensate C is used.

FIG. 28 is a view showing the relation between the height of the plate and the capacity retention ratio at the 200th cycle when the condensate C is used.

FIG. 29 is a view showing the relation between the height of the plate when the condensate C is used and the improvement range of the capacity retention ratio when the separator has ribs on both sides with respect to the case in which the separator has the rib only on the positive electrode plate side.

FIG. 30 is a view showing the relation between the distance between the electrodes and the amount of the gas stagnation when the height of the plate in which the condensate A is used is 278 mm.

DESCRIPTION OF EMBODIMENTS

An aspect of the present invention relates to a lead-acid battery including a positive electrode plate, a negative electrode plate, an electrolyte solution, a separator interposed between the positive electrode plate and the negative electrode plate, wherein the negative electrode plate includes a negative electrode current collector and a negative electrode material, the negative electrode material has a density of 3.5 g/cm$^3$ or less, the negative electrode material contains an organic expander other than a lignin, and the separator has a first rib on a first surface on a positive electrode plate side and a second rib on a second surface on a negative electrode plate side.

According to the aspect of the present invention, a good capacity retention ratio can be achieved even when the negative electrode material has a small density of 3.5 g/cm$^3$ or less.

[Lead-acid battery]

A lead-acid battery according to an embodiment of the present invention includes a positive electrode plate, a negative electrode plate, an electrolyte solution, a separator interposed between the positive electrode plate and the negative electrode plate. A negative electrode material has a density of 3.5 g/cm$^3$ or less, and the negative electrode material contains an organic condensate. Furthermore, the separator has a first rib on a first surface on the positive electrode plate side and a second rib on a second surface on the negative electrode plate side.

Typically, when the utilization factor of lead increases by reducing the amount of lead used in the negative electrode material and reducing the negative electrode material density, it is difficult to improve the capacity retention ratio because the negative electrode material falls off significantly due to expansion during the deep discharge cycle. The expansion of the negative electrode material becomes more remarkable when the negative electrode material density is 3.1 g/cm$^3$ or less, and becomes even more remarkable when the negative electrode material density is 2.9 g/cm$^3$ or less. Therefore, it has been considered very difficult to improve the capacity retention ratio while reducing the amount of lead used.

The deep discharge cycle refers to, for example, a charge-discharge cycle that repeats charging/discharging in which discharging is performed for 3 hours with a current (A) that is 0.25 times the value described as the rated capacity (Ah), and then charging is performed for 5 hours with a current (A) that is 0.18 times the value described as the rated capacity (Ah) (that is, charging is performed about 120% of the discharge capacity) at a low temperature (for example, 15°C) for about 300 cycles.

When the negative electrode material contains an organic expander, and the separator has a first rib on a first surface on the positive electrode plate side and a second rib on a second surface on the negative electrode plate side, even when the negative electrode material has a small density of 3.5 g/cm$^3$ or less, a good capacity retention ratio can be achieved. It is considered that this is because the expansion of the negative electrode material is suppressed and the gas stagnation suppressing effect is remarkably exhibited by providing ribs on both sides of the separator. The mechanism is described below.

The negative electrode material may contain a lignin as the organic expander, and needs to contain an organic condensate. When the negative electrode material contains the organic condensate, the expansion of the negative electrode material during the charge-discharge is remarkably suppressed, and the flow of gas and electrolyte solution between the positive electrode plate and the negative electrode plate is less likely to be obstructed for a long period of time. As a result, the progress of sulfation and the coarsening a crystal of a lead sulfate are suppressed, and it is advantageous in maintaining the good capacity retention ratio and the low-temperature high-rate performance of the lead-acid battery.

In this regard, typically, in order to achieve a good capacity retention ratio, the negative electrode material density is required to be about 3.7 g/cm$^3$ or more. When the negative electrode material density is reduced to 3.5 g/cm$^3$ or less in order to reduce the amount of lead used, since the utilization factor of lead which is an active material increases, the negative electrode material expands intensely. As a result, it is considered that the negative electrode material falls off during the deep discharge cycle, and the expansion of the negative electrode material causes remarkable gas stagnation between the electrodes to reduce the effective area of the plate, the stratification is promoted, and the capacity retention ratio lowers significantly.

When the organic condensate is only contained in the negative electrode material, the expansion of the negative electrode material is suppressed, but the gas stagnation is likely to occur due to the reduction of the negative electrode material density. In the initial stage of the cycle in which the negative electrode material does not expand so much, the significant effect of improving the capacity retention ratio is not observed due to the effect of the gas stagnation. As the deep discharge cycle progresses, the suppression of the expansion of the negative electrode material is effective, and the decrease in the capacity retention ratio is suppressed. However, the effect of the gas stagnation due to the reduction of the negative electrode material density is considered to be greater than the effect that the expansion of the negative electrode material is suppressed. Therefore, even when the negative electrode material contains the organic condensate, the capacity retention ratio is lowered as compared with the case where the negative electrode material density is about 3.7 g/cm3.

From the viewpoint of suppressing oxidative deterioration of the separator due to the positive electrode plate, it is common practice to provide the rib only on the first surface of the separator on the positive electrode plate side.

However, it is difficult to eliminate the gas stagnation even when the rib is provided only on the first surface of the separator on the positive electrode plate side. Furthermore, since most of the gas is generated on the surface of the negative electrode plate, when the rib is provided only on the second surface of the separator on the negative electrode plate side, the gas stagnation is improved in the initial stage of the charge-discharge cycle, but the rib gradually collapses and the gas is trapped between the plates. Therefore, it is still difficult to eliminate the gas stagnation.

When a separator having ribs on both sides is used, a sufficient gas transfer path is secured and the mechanical strength of the separator is improved. Therefore, the capacity retention ratio is improved in the initial stage of the deep discharge cycle. However, since the expansion of the negative electrode material progresses considerably, when the separator having ribs on both sides is only used, the ribs are collapsed as the deep discharge cycle progresses, and thus the effect of suppressing the gas stagnation by providing ribs on both sides of the separator is gradually reduced. Finally, even when the separator having ribs on both sides is used, the capacity retention ratio is significantly lowered as compared with the case where the negative electrode material density is about 3.7 $g/cm^3$. It is considered that the ribs are collapsed as the deep discharge cycle progresses even if the separator has ribs on both sides when reducing the negative electrode material density.

When the negative electrode material contains an organic condensate and the separator having ribs on both sides is used, a good capacity retention ratio can be achieved from the initial stage of the cycle to, for example, after 300 cycles. Moreover, the capacity retention ratio is further improved as compared with the case where the negative electrode material density is about 3.7 $g/cm^3$. Such a remarkable improvement in the capacity retention ratio is related to the fact that the stratification of the electrolyte solution is remarkably suppressed by synergistically acting the organic condensate and the separator having the ribs on both sides. More specifically, when the separator having ribs on both sides is used, the gas stagnation between the electrodes is suppressed, the mechanical strength of the separator is also increased, and the ribs are less likely to be deformed. Further, since the expansion of the negative electrode material is suppressed by the action of the organic condensate, a sufficient gas transfer path between the electrodes is well secured for a long period of time. As a result, it is considered that the stratification is remarkably suppressed and the capacity retention ratio is significantly improved.

When the negative electrode material contains the organic condensate and the separator having ribs on both sides is used, the gas stagnation and stratification are remarkably suppressed, so that the self discharge reaction is remarkably suppressed. The self discharge reaction is promoted by increasing a specific gravity of the electrolyte solution. The specific gravity of the electrolyte solution gradually increases because the amount of water addition that should be originally refilled is not refilled due to the gas stagnation. By reducing the gas stagnation, the specific gravity of the electrolyte solution is less likely to increase, and self discharge (particularly self discharge at a high temperature) is alleviated. Further, since the stratification is suppressed, the specific gravity of the lower electrolyte solution is less likely to increase, and the self discharge at the lower part of the plate is also alleviated.

The height of the positive electrode plate and the height of the negative electrode plate may be 160 mm or more, respectively, from the viewpoint of increasing the capacity. In the case of a lead-acid battery with a plate having a height of 160 mm or more, the stratification is particularly remarkably suppressed according to the above configuration. Therefore, the higher the height of the plate, the greater the improvement range of the capacity retention ratio. Since the gas stagnation tends to become apparent at the critical point with a height of 160 mm, it is considered that the improvement range of the capacity retention ratio also increases remarkably at a height of 160 mm or more.

The height of the positive electrode plate or the negative electrode plate (hereinafter, also referred to simply as "plate") is the height of the part of the plate excluding the lug, and corresponds to the height including upper and lower frames of a frame bone part of the current collector.

For example, stratification of the electrolyte solution of an industrial lead-acid battery used in an electric vehicle can be suppressed by overcharging the lead-acid battery to generate gas and causing the electrolyte solution to flow by the gas. However, when the height of the positive electrode plate and the height of the negative electrode plate are 160 mm or more, respectively, even when a sufficient amount of the gas is generated by overcharging, it is actually difficult to stir the electrolyte solution as expected in the conventional configuration. Specifically, when the lignin is used as the organic expander and a separator having a rib on only one side is used, it is difficult to sufficiently eliminate stratification by the gas generated by overcharging. This is because when the height of the plate is 160 mm or more and the negative electrode material density is reduced to 3.5 $g/cm^3$ or less, the probability that the generated gas is trapped between the plates before reaching the liquid surface is very high, and the gas stagnation can progress very significantly.

Since progress of the electrode reaction is hindered between the plates in which the gas stagnates, an effective plate area is reduced. As the effective plate area is reduced, the low-temperature high-rate (HR) discharge performance tends to decrease. The more overcharged to make the electrolyte solution flow, the more remarkable the decrease in the effective plate area becomes. Above all, when the height of the positive electrode plate and the height of the negative electrode plate are 200 mm or more, respectively, the decrease in the effective plate area becomes more remarkable, when the heights are 270 mm or more, the decrease becomes more remarkable, and when the heights are 350 mm or more or 380 mm or more, the decrease becomes extremely remarkable. Since the Japanese Industrial Standards (JIS) stipulate the frame size for storing an assembled battery for an electric vehicle, the plate tends to be long in a lengthwise direction when the amount of lead is increased in order to increase the capacity.

Examples of the lead-acid battery having a positive electrode plate and a negative electrode plate each having a height of 160 mm or more include, although not particularly limited, lead-acid batteries used in electric vehicles such as a forklift, an automatic guided vehicle (AGV), an electric cart, and an aerial work platform.

On the other hand, when the separator having ribs on both sides is used and the organic condensate is used, the low-temperature high-rate discharge performance after repeating the charge-discharge cycle is remarkably improved. Further, the improvement range of the low-temperature high-rate discharge performance is remarkable when the negative electrode material density is small. This is related to the reduction of the gas stagnation by the separator having ribs on both sides, and the increase in the effective plate area that can contribute to the discharge.

When the height of the positive electrode plate and the height of the negative electrode plate are 200 mm or more, respectively, the low-temperature high-rate discharge performance becomes more remarkable, when the heights are 270 mm or more, the decrease becomes more remarkable, and when the heights are 350 mm or more or 380 mm or more, the decrease becomes extremely remarkable.

When the low-temperature high-rate discharge performance is measured after repeating the charge-discharge cycle, for example, first, under the conditions already described, the deep discharge cycle (at a temperature of 10°C ± 2°C, discharging is performed for 3 hours with a current (A) that is 0.25 times the value described as a rated capacity (Ah), and then charging is performed for 5 hours with a current (A) that is 0.195 times the value described as the rated capacity (Ah)) is repeated for 300 cycles. The amount of the gas stagnation stabilizes after 200 cycles, does not increase significantly after that, and is almost saturated up to 300 cycles. After that, the low-temperature high-rate discharge performance is measured as the elapsed time (discharge duration time) when lead-acid battery in a full charge state is discharged, for example, at a temperature of -15°C ± 2°C, with a current (A) that is once the value described as the rated capacity (Ah) until the discharge voltage reaches 1.0 V/cell.

The distance between the positive electrode plate and the negative electrode plate may be, for example, 3 mm or less, and may be 2 mm or less. At first glance, it is considered that the longer the distance between the positive electrode plate and the negative electrode plate, the more advantageous the elimination of the gas stagnation, and the more advantageous the improvement in the capacity retention ratio. However, if the distance between the positive electrode plate and the negative electrode plate becomes excessively long, it is disadvantageous in the low-temperature high-rate discharge performance after repeating the charge-discharge. This is because the negative electrode material is promoted to fall off when the distance between the positive electrode plate and the negative electrode plate is long. When the negative electrode material falls off, since the material that has fallen off stagnates between the plates and blocks the gas flow path, the elimination of the gas stagnation is hindered. Considering the balance between the capacity retention ratio and the low-temperature high-rate discharge performance, the distance between the positive electrode plate and the negative electrode plate is preferably 1.3 mm or less, and more preferably 1 mm or less. When the distance between the positive electrode plate and the negative electrode plate is 1.3 mm or less, the gas stagnation is significantly increased by providing the rib on only one side of the separator, but the gas stagnation can be significantly suppressed when the ribs are provided on both sides of the separator.

When the ribs are provided on both sides of the separator, the height of the first rib and the height of the second rib may be, for example, 0.1 mm or more, respectively. It is sufficient to set the height of each rib to 0.1 mm or more in order to achieve the effect of suppressing the gas stagnation. For example, as compared with the case where the first rib is provided only on the positive electrode plate side of the separator, when the ribs having a height of 0.1 mm or more are provided on both sides, the amount the gas stagnation is remarkably reduced, for example, to 1/20 or less.

The height of the second rib may be, for example, 10% to 70% of the total thickness of the separator. For example, when the distance between the positive electrode plate and the negative electrode plate is 1.3 mm or less and the total thickness of the separator is 1.3 mm or less, the height of the second rib may be selected from the range of 0.1 mm to 0.91 mm. When the total thickness of the separator is 1.1 mm or less, the height of the second rib may be selected from the range of 0.1 mm to 0.77 mm. When the total thickness of the separator is 0.8 mm or less, the height of the second rib may be selected from the range of 0.1 mm to 0.56 mm. When the total thickness of the separator is 0.6 mm or less, the height of the second rib may be selected from the range of 0.1 mm to 0.42 mm.

The above configuration of the lead-acid battery is effective in a liquid type (vent type) lead-acid battery in which stratification is likely to occur. Above all, in particular, in a lead-acid battery having a high battery height (particularly a lead-acid battery for an electric vehicle) in which stratification is likely to occur, the configuration of the lead-acid battery according to the present embodiment is advantageous. The height of the plate of the lead-acid battery for the electric vehicle can be, for example, 270 mm or more, 350 mm or more, 380 mm or more, or 400 mm or more.

In the present specification, the full charge state of a liquid type lead-acid battery is defined according to the definition of JIS D 5301:2006.

More specifically, the full charge state is the state in which the lead-acid battery is charged with a current (A) 0.2 times the value described as the rated capacity (Ah) until the terminal voltage during charging measured every 15 minutes or the density of the electrolyte solution that temperature correction is performed at 20°C shows a constant value with three significant figures three times in a row.

A lead-acid battery in the full charge state is a fully charged lead-acid battery that is existing formation. The full charge of the lead-acid battery may be performed immediately after the formation, or after a lapse of time from the formation (for example, the lead-acid battery in use (preferably in the initial stage of use) may be fully charged after the formation), as long as the full charge is performed after the formation. The battery in the initial stage of use means a battery that has not been used for a long time and has hardly deteriorated.

Hereinafter, the lead-acid battery according to the embodiment of the present invention is described for each main constituent element, but the present invention is not limited to the following embodiment.

(Negative electrode plate)

The negative electrode plate includes a negative electrode current collector and a negative electrode material. The negative electrode material is the negative electrode plate excluding the negative electrode current collector.

Members such as a mat and pasting paper may be attached to the negative electrode plate. Since such a member (attached member) is used integrally with the negative electrode plate, the member is included in the negative electrode plate. When the negative electrode plate includes the attached member, the negative electrode material is a part of the negative electrode plate excluding the negative electrode current collector and the attached member. However, when the attached member such as a mat is attached to the separator, the thickness of the attached member is included in the thickness of the separator.

The negative electrode plate can be formed by applying or filling a negative electrode paste to the negative electrode current collector and curing and drying the negative electrode current collector to produce an unformed negative electrode plate, and then forming the unformed negative electrode plate. The negative electrode paste is prepared by adding water and sulfuric acid to a lead powder, an organic expander and, various additives as necessary, and mixing them. At the time of curing, it is preferable to cure the unformed negative electrode plate at a higher temperature than room temperature and a high humidity.

The formation can be performed by charging the element while the element including the unformed negative electrode plate is immersed in the electrolyte solution containing sulfuric acid in the container of the lead-acid battery. However, the formation may be performed before the lead-acid battery or the element is assembled. A spongy lead is produced by the formation.

(Negative electrode current collector)

The negative electrode current collector has a frame bone part and a grid part continuous to the frame bone part. The grid part has a plurality of quadrangular squares. The frame bone part has at least an upper frame and a lower frame, and may have a pair of side part elements. The pair of side part elements connect both ends of the upper frame and both ends of the lower frame. The upper frame is usually provided with a lug.

The negative electrode current collector may be formed by casting lead (Pb) or a lead alloy, or may be formed by processing a lead sheet or a lead alloy sheet. Examples of the processing method include expanding processing and punching processing. It is preferable to use a negative electrode grid as the negative electrode current collector because the negative electrode material can be easily supported.

The lead alloy used in the negative electrode current collector may be any of a Pb-Sb alloy, a Pb-Ca alloy, and a Pb-Ca-Sn alloy. These lead or lead alloy may further contain at least one kind selected from the group consisting of Ba, Ag, Al, Bi, As, Se, Cu and the like as an additional element. The negative electrode current collector may include a surface layer. The surface layer and the inner layer of the negative electrode current collector may have different compositions. The surface layer may be formed on a part of the negative electrode current collector. The surface layer may be formed on the lug part of the negative electrode current collector. The surface layer of the lug part may contain Sn or Sn alloy.

(Negative electrode material)

The negative electrode material contains a negative active material (lead) that develops capacity by an oxidation-reduction reaction. The negative electrode material may include a polymer compound, an expander, a carbonaceous material and/or other additives. Examples of the additive include barium sulfate and a fiber (such as a resin fiber), and are not limited to these. The negative active material in a charged state is spongy lead, the unformed negative electrode plate is usually produced by using a lead powder.

(Expander)

As described above, the negative electrode material contains the organic condensate as the organic expander. As the organic expander, for example, an organic expander synthesized by a known method may be used, or a generally commercially available product may be used. The negative electrode material may contain one kind of the organic expander, or may contain two or more kinds. The organic expander may contain lignin, but contains at least an organic expander other than the lignin.

Here, the lignin includes a lignin derivative in addition to the lignin. Examples of the lignin derivative include a lignin sulfonic acid or a salt thereof (an alkali metal salt (such as a sodium salt) and the like).

Organic expanders other than the lignin include an organic condensate (hereinafter, is simply referred to as a condensate). Here, the condensate is a synthetic product and is also generally referred to as a synthetic expander. The condensate may contain a unit of an aromatic compound (hereinafter, is also referred to as an aromatic compound unit). The aromatic compound unit refers to a unit derived from an aromatic compound incorporated in the condensate. That is, the aromatic compound unit is a residue of the aromatic compound. The condensate may contain one kind of the aromatic compound unit or may contain a plurality of kinds.

Examples of the condensate include a condensate made of an aldehyde compound of the aromatic compound. Such a condensate can be synthesized by reacting the aromatic compound with the aldehyde compound. Here, the aromatic compound and the aldehyde compound are reacted in the presence of a sulfite, or an aromatic compound containing a sulfur element (for example, bisphenol S) as the aromatic compound is used. As a result, a condensate containing the sulfur element can be obtained. For example, a sulfur element content in the condensate can be adjusted by adjusting the amount of the sulfite and/or the amount of the aromatic compound containing the sulfur element. The method is also applied when other raw materials are used. The aromatic compound to be condensed to obtain the condensate may be one kind or two or more kinds. The aldehyde compound may be an aldehyde (for example, formaldehyde) or a condensate of the aldehyde.

The aromatic compound may have a sulfur-containing group. That is, the condensate may be an organic polymer containing a plurality of aromatic rings in a molecule and containing the sulfur element as the sulfur-containing group. The sulfur-containing group may be directly bonded to the aromatic ring of the aromatic compound, or, for example, may be bonded to the aromatic ring as an alkyl chain having a sulfur-containing group. Among the sulfur-containing groups, a sulfonic acid group or a sulfonyl group which is a stable form is preferable. The sulfonic acid group may be present in an acid form or in a salt form such as a Na salt.

The sulfur-containing group is a hydrophilic group with strong polarity. Since the hydrophilic group forms a stable bond with a water molecule, a hydrogen ion, and a hydrogen sulfate ion in the electrolyte solution, the hydrophilic group tends to be unevenly distributed on the surface of the condensate. Since the hydrophilic group unevenly distributed on the surface have an electric charge, electrostatic repulsion occurs between the associations of the condensate, association of colloidal particles of the condensate is limited, and thus the colloidal particle size tends to be small. As a result, it is considered that the pore size of the negative electrode material becomes smaller. That is, since the structure of the spongy lead becomes fine at the interface between lead particles or at the interface between the current collector and the negative electrode material, the mechanical strength at the interface is improved. Therefore, an effect of suppressing the expansion of the negative electrode material is great.

Examples of the aromatic ring of the aromatic compound include a benzene ring and a naphthalene ring. When the aromatic compound has a plurality of aromatic rings, the aromatic rings may be directly bonded or linked by a linking group (for example, an alkylene group (including an alkylidene group) and a sulfone group). Examples of such a structure include a bisallene structure (biphenyl, bisphenylalkane, bisphenylsulfone, and the like).

Examples of the aromatic compound include the above-mentioned aromatic ring and a compound having a functional group such as a hydroxy group or an amino group. The functional group such as a hydroxy group or an amino group may be directly bonded to the aromatic ring, or may be bonded as an alkyl chain having a functional group. The hydroxy group also includes a salt of the hydroxy group (-OMe). The amino group also includes a salt of the amino group (salt with an anion). Examples of the Me include alkali metals (Li, K, Na, and the like) and metals in group 2 of the periodic table (Ca, Mg, and the like).

The aromatic compound that is the source of the aromatic compound unit may contain at least one kind selected from the group consisting of a bisallene compound and a monocyclic compound. In this case, even when the lead-acid battery experiences a temperature environment higher than room temperature, aggregation of the condensate in the negative electrode material is suppressed, coarsening of the fine structure of the negative electrode material is prevented, and low-temperature high-rate performance tends to be less impaired.

Examples of the bisallene compound include a bisphenol compound, a hydroxybiphenyl compound, and a bisallene compound having an amino group (bisarylalkane compound having an amino group, bisarylsulfone compound having an amino group, and biphenyl compound having an amino group). Among them, the bisphenol compound is preferable.

As the bisphenol compound, a bisphenol A, a bisphenol S, and a bisphenol F are preferable. For example, the bisphenol compound may contain at least one kind selected from the group consisting of bisphenol A and bisphenol S. Among them, the condensate containing the bisphenol S unit has a sulfur-containing group, and a more hydrophilic functional group can be present on the surface of the condensate, so that the effect of suppressing the expansion of the negative electrode material is further enhanced. When the bisphenol compound contains both a bisphenol A and a bisphenol S, the molar ratio of bisphenol A to bisphenol S may be, for example, in the range of 1 : 9 to 9 : 1, and the range of 2 : 8 to 8 : 2 is preferable.

The bisphenol compound may have a bisphenol skeleton, and the bisphenol skeleton may have a substituent. That is, bisphenol A may have the bisphenol A skeleton, and the skeleton may have a substituent. The bisphenol S may have a bisphenol S skeleton, and the skeleton may have a substituent.

As the monocyclic compound, the hydroxyallene compound and an aminoallene compound are preferable. Among them, the hydroxyallene compound is preferable.

Examples of the hydroxyallene compound include a hydroxynaphthalene compound and a phenol compound. For example, it is preferable to use a phenol sulfonic acid compound which is the phenol compound (such as phenol sulfonic acid or a substitute thereof). The condensate containing the unit of the phenol sulfonic acid compound has a phenolic hydroxy group and a sulfonic acid group. Both the phenolic hydroxy group and the sulfonic acid group are hydrophilic groups that exhibit acidity with strong polarity, and the functional groups are negatively charged. Therefore, the condensate containing the unit of the phenol sulfonic acid compound has a great effect of making the structure of the spongy lead fine and suppressing the expansion and falling off in the negative electrode material. Further, the condensate containing the unit of the phenol sulfonic acid compound has low solubility in the electrolyte solution (sulfuric acid aqueous solution) and easily stays in the negative electrode material even if the deep discharge cycle is repeated. Therefore, the effect of suppressing the expansion and falling off of the negative electrode material is even greater. As already described, the phenolic hydroxy group also includes the salt of the phenolic hydroxy group (-OMe).

Examples of the aminoallene compound include an aminonaphthalene compound and an aniline compound (such as aminobenzenesulfonic acid and an alkylaminobenzenesulfonic acid).

The aromatic compound that is the source of the aromatic compound unit may contain both the bisallene compound and the monocyclic compound. In this case, in addition to the effect derived from the above-mentioned unit of the phenol sulfonic acid compound, the effect derived from the bisallene compound can be obtained. Specifically, the bisallene compound has the property of an interaction between aromatic ring $\pi$ electrons, the monocyclic compound inhibits the intramolecular bond formation due to the interaction, so that flexibility can be imparted to a linear chain of the molecule. Therefore, it is considered that the hydrophilic functional group is more easily exposed to the surface. In particular, from the viewpoint of improving the low-temperature high-rate performance, it is desirable that the aromatic compound contains both the bisallene compound and the monocyclic compound.

When the aromatic compound that is the source of the aromatic compound unit contains both the bisallene compound and the monocyclic compound, the molar ratio of the bisallene compound to the monocyclic compound may be, for example, in the range of 1 : 9 to 9 : 1, and preferably in the range of 2 : 8 to 8 : 2.

The sulfur element content in the organic condensate may be, for example, 2000 $\mu$mol/g or more, preferably 3000 $\mu$mol/g or more. In this case, the amount of the sulfur-containing group contained in the organic condensate is large, the colloidal particle size of the organic condensate tends to be small, and the structure of the negative electrode material can be kept fine, so that the effect of suppressing the expansion of the negative electrode material is even greater.

When the sulfur element content in the organic condensate is X $\mu$mol/g, the sulfur element content contained per 1 g of the organic condensate is X $\mu$mol.

The upper limit of the sulfur element content of the organic condensate is not particularly limited, and may be, for example, 9000 $\mu$mol/g or less, 8000 $\mu$mol/g or less, or 7000 $\mu$mol/g or less. The lower limit values and the upper limit values can be arbitrarily combined.

The sulfur element content of the organic condensate is, for example, 2000 $\mu$mol/g or more (or 3000 $\mu$mol/g or more) and 9000 $\mu$mol/g or less, 2000 $\mu$mol/g or more (or 3000 $\mu$mol/g or more) and 8000 $\mu$mol/g or less, or 2000 $\mu$mol/g or more (3000 $\mu$mol/g or more) and 7000 $\mu$mol/g or less.

The weight average molecular weight (Mw) of the organic condensate is, for example, preferably 7000 or more. The Mw value of the organic condensate is, for example, 100,000 or less, and may be 20,000 or less.

In the present specification, the Mw value of the organic condensate or the organic expander is determined by GPC. The standard substance used to determine the Mw value is sodium polystyrene sulfonate.

The Mw value is measured under the following conditions using the following device.

GPC device: Build-up GPC system SD-8022/DP-8020/AS-8020/CO-8020/UV-8020 (manufactured by Tosoh Corporation)
Column: TSKgel G4000SWXL and G2000SWXL (7.8 mmI.D. $\times$ 30 cm) (manufactured by Tosoh Corporation)
Detector: UV detector, $\lambda$ = 210 nm

Eluent: mixed solution of NaCl aqueous solution with a concentration of 1 mol/L : acetonitrile (the volume ratio is 7 : 3)
Flow velocity: 1 mL/min.
Concentration: 10 mg/mL
Injection volume: 10 μL
Standard substance: Na polystyrene sulfonate (Mw = 275,000, 35,000, 12,500, 7,500, 5,200, and 1,680)

When the negative electrode material contains the lignin in addition to the organic condensate, a sulfur element content in the lignin is, for example, 1000 μmol/g or less, and may be 800 μmol/g or less. The lower limit of the sulfur element content in lignin is not particularly limited, and is, for example, 400 μmol/g or more.

The Mw value of the lignin is, for example, less than 7000. The Mw value of the lignin is, for example, 3000 or more.

When the organic condensate and the lignin are used in combination, the mass ratio can be arbitrarily selected. From the viewpoint of remarkably improving the binding capacity between the negative electrode current collector and the negative electrode material, the content of the organic condensate in the total amount of the organic condensate and the lignin is preferably 20% by mass or more, may be 50% by mass or more, and may be 80% by mass or more.

The greater the content of the organic expander (or organic condensate) contained in the negative electrode material is, the more advantageous it is to improve the low-temperature high-rate performance of the lead-acid battery when the charge-discharge cycle is repeated. However, when the content of the organic expander contained in the negative electrode material is excessively large, the initial capacity of the lead-acid battery tends to decrease. From the above, the content of the organic expander contained in the negative electrode material is, for example, 0.01% by mass or more, and may be 0.03% by mass or more. The content of the organic expander is, for example, 0.5% by mass or less, and may be 0.3% by mass or less. The lower limit values and the upper limit values can be arbitrarily combined.

The content of the organic expander contained in the negative electrode material may be 0.01% by mass or more and 0.5% by mass or less, 0.03% by mass or more and 0.5% by mass or less, 0.01% by mass or more and 0.3% by mass or less, or 0.03% by mass or more and 0.3% by mass or less. Similarly, the content of the organic condensate in the negative electrode material may be 0.03% by mass or more and 0.3% by mass or less.

(Barium sulfate)

The negative electrode material can contain barium sulfate. The content of barium sulfate in the negative electrode material is, for example, 0.05% by mass or more, and may be 0.10% by mass or more. The content of barium sulfate in the negative electrode material is 3% by mass or less, and may be 2% by mass or less. The lower limit values and the upper limit values can be arbitrarily combined. The content of barium sulfate in the negative electrode material may be 0.05% by mass or more and 3% by mass or less, 0.05% by mass or more and 2% by mass or less, 0.10% by mass or more and 3% by mass or less, or 0.10% by mass or more and 2% by mass or less.

(Carbonaceous material)

The negative electrode material can contain a carbonaceous material. As the negative electrode material, carbon black, graphite, hard carbon, soft carbon, and the like can be used. Examples of carbon black include acetylene black, furnace black, and lamp black. The furnace black also includes ketjen black (trade name). The graphite may be any carbonaceous material containing a graphitic form crystal structure, and may be either artificial graphite or natural graphite. As for the carbonaceous material, one kind may be used alone, or two or more kinds may be combined.

The content of the carbonaceous material in the negative electrode material is, for example, preferably 0.05% by mass or more, and may be 0.10% by mass or more. The content of the carbonaceous material is, for example, 5% by mass or less, and may be 3% by mass or less. The lower limit values and the upper limit values can be arbitrarily combined. The content of the carbonaceous material in the negative electrode material may be, for example, 0.05% by mass or more and 5% by mass or less, 0.05% by mass or more and 3% by mass or less, 0.10% by mass or more and 5% by mass or less, or 0.10% by mass or more and 3% by mass or less.

(Analysis of constituents of negative electrode material)

The method of analyzing the negative electrode material or its constituents is described below. Prior to the analysis, the lead-acid battery after formation is fully charged and then disassembled to obtain the negative electrode plate to be analyzed. The obtained negative electrode plate is washed with water to remove sulfuric acid from the negative electrode plate. The washing with water is carried out by pressing a pH test paper against the surface of the negative electrode plate washed with water until it is confirmed that the color of the test paper does not change. However, the time for washing with water shall be within 2 hours. The negative electrode plate washed with water is dried at 60 ± 5°C for about 6 hours in a reduced-pressure environment. Next, the negative electrode material is separated from the negative electrode plate and pulverized to obtain a sample.

(1) Analysis of organic expander

(1-1) Qualitative analysis of organic expander (or organic condensate) in negative electrode material

The sample is immersed in an aqueous solution of sodium hydroxide (NaOH) with a concentration of 1 mol/L to extract an organic expander. Next, when the extract contains a plurality of organic expanders, the organic expanders are separated from the extract. As for each of the separated products containing each organic expander, an insoluble component is removed by filtration, the resulting solution is desalted, and then concentrated and dried. The desalting is performed by using a desalting column, by passing the solution through an ion exchange membrane, or by introducing the solution into a dialysis tube and then immersing the dialysis tube in distilled water. A powder sample of the organic expander can be obtained by drying the desalted solution.

A kind of the organic expander is identified by using a combination of information obtained from an infrared spectroscopic spectrum measured using the powder sample of the organic expander obtained in this way, an ultraviolet-visible absorption spectrum obtained by diluting the powder sample with distilled water and measuring the dilution with an ultraviolet-visible absorption spectrometer, and an NMR spectrum of the resulting solution dissolved in a predetermined solvent such as heavy water.

When the above extract contains a plurality of organic expanders, the organic expanders are separated as follows.

First, the extract is measured by infrared spectroscopy, NMR, and/or GC-MS to determine whether or not more than one kind of organic expanders is contained. Next, the molecular weight distribution of the above extract is measured by GPC analysis, and if more than one kind of organic expanders can be separated by the molecular weights, the organic expanders are separated by column chromatography based on a difference in the molecular weights.

When separation due to the difference in the molecular weights is difficult, one organic expander is separated by a precipitation separation method by utilizing a difference in solubility which differs depending on the kind of a functional group and/or the amount of functional group of the organic expander. For example, when two kinds of the organic expanders are contained, one organic expander is aggregated and separated by adding a sulfuric acid aqueous solution to a mixture in which the above extract is dissolved in an aqueous solution of NaOH and adjusting the pH of the mixture. An insoluble component is removed by filtration from the separated product dissolved in the aqueous solution of NaOH again as described above. Additionally, the remaining solution after separating the one organic expander is concentrated. The resulting concentrate contains the other organic expander, and an insoluble component is removed from the concentrate by filtration as described above.

(1-2) Determination of content of organic expander in negative electrode material

In the same manner as in (1-1) above, as for each of the separated products containing each organic expander, an insoluble component is removed by filtration to obtain the resulting solution. The ultraviolet-visible absorption spectrum is measured for each of the obtained solutions. The content of each organic expander in the negative electrode material is determined by using the peak intensity characteristic of each organic expander and a calibration curve drawn in advance.

When a lead-acid battery with an unknown content of an organic expander is obtained and the content of the organic expander is measured, since the structural formula of the organic expander cannot be specified exactly, the same organic expander as the organic expander specified from the calibration curve may not be used. In this case, the content of the organic expander is measured using the ultraviolet-visible absorption spectrum by drawing a calibration curve using another available organic polymer showing similar shapes in an ultraviolet-visible absorption spectrum, an infrared spectroscopic spectrum, and an NMR spectrum to the organic expander extracted from the negative electrode of the battery.

(1-3) Sulfur element content in organic expander

In the same manner as in (1-1) above, a powder sample of the organic expander is obtained, and then the sulfur element in 0.1 g of the organic expander is converted into sulfuric acid by an oxygen combustion flask method. At this time, an eluate in which a sulfate ion is dissolved in an adsorbent is obtained by burning the powder sample in a flask with the adsorbent introduced. Next, the sulfur element content (C1) in 0.1 g of the organic expander is determined by titrating the eluate with barium perchlorate using thorin as an indicator. Next, the C1 value is multiplied by 10 to calculate the sulfur element content ($\mu$mol/g) contained per 1 g of the organic expander.

(2) Determination of carbonaceous material and barium sulfate

The uncrushed sample is crushed, 50 ml of nitric acid having a concentration of 20% by mass is added to 10 g of the crushed sample, and the mixture is heated for about 20 minutes to dissolve the lead component as lead nitrate. Next, the solution containing lead nitrate is filtered to separate solids such as a carbonaceous material and barium sulfate.
After the obtained solid content is dispersed in water to form a dispersion liquid, components other than the carbonaceous material and barium sulfate (for example, a reinforcing material) are removed from the dispersion liquid by using a sieve. Next, the dispersion is suction-filtered using a membrane filter whose mass was measured in advance, and the membrane filter is dried together with the filtered sample in a dryer at 110°C $\pm$ 5°C. The filtered sample is a mixed sample of the carbonaceous material and barium sulfate. The mass ($M_m$) of the mixed sample is measured by subtracting the mass of the membrane filter from the total mass of the mixed sample and the membrane filter after drying. Then, the mixed sample after drying is put into a crucible together with the membrane filter and then the crucible is incinerated at 700°C or higher. The remaining residue is barium oxide. The mass of barium oxide is converted to the mass of barium sulfate to determine the mass of barium sulfate ($M_B$). The mass of the carbonaceous material is calculated by subtracting the mass $M_B$ from the mass $M_m$.

(Positive electrode plate)

A positive electrode plate of the lead-acid battery can be classified into types such as a paste type and a clad type. The paste type positive electrode plate includes a positive electrode current collector and a positive electrode material. The positive electrode material is held on the positive electrode current collector. In the paste type positive electrode plate, the positive electrode material is the positive electrode plate excluding the positive electrode current collector. The positive electrode current collector may be formed by casting lead (Pb) or a lead alloy, or may be formed by processing a lead sheet or a lead alloy sheet. Examples of the processing method include expanding processing and punching processing. It is preferable to use a grid-shaped current collector as the positive electrode current collector because the positive electrode material can be easily supported. The clad type positive electrode plate has a plurality of porous tubes, a spine inserted in each tube, a current collecting section connecting the plurality of spines, a positive electrode material filled in the tube into which the spine is inserted, and a linking seat for connecting a plurality of tubes. In the clad type positive electrode plate, the positive electrode material is the positive electrode material excluding the tube, the spine, the current collecting section, and the linking seat. In the clad type positive electrode plate, the spine and the current collecting section may be collectively referred to as a positive electrode current collector.
Members such as a mat and pasting paper may be attached to the positive electrode plate. Since such a member (attached member) is used integrally with the positive electrode plate, the member is included in the positive electrode plate. When the positive electrode plate includes the attached member, the paste type positive electrode material is a part of the positive electrode plate excluding the positive electrode current collector and the attached member.
As the lead alloy used for the positive electrode current collector, a Pb-Sb alloy, a Pb-Ca alloy, and a Pb-Ca-Sn alloy are preferable from the viewpoint of corrosion resistance and mechanical strength. The positive electrode current collector may include a surface layer. The surface layer and the inner layer of the positive electrode current collector may have different compositions. The surface layer may be formed on a part of the positive electrode current collector. The surface layer may be formed only on the grid part, only on the lug part, or only on the frame bone part of the positive electrode current collector.
The positive electrode material contained in the positive electrode plate contains a positive active material (lead dioxide) that develops the capacity by an oxidation-reduction reaction. The positive electrode material may contain other additives as needed.
An unformed paste type positive electrode plate is obtained by filling the positive electrode current collector with a positive electrode paste, curing and drying the positive electrode current collector. The positive electrode paste is prepared by mixing lead powder, an additive, water, and sulfuric acid. The unformed clad type positive electrode plate is formed by filling a porous tube into which a spine connected by a current collecting section is inserted with a lead powder or a slurry-like lead powder, and connecting a plurality of the tubes by a linking seat. Then, a positive electrode plate is obtained by forming the unformed positive electrode plates.
The formation can be carried out by charging the element in a state where the element including the unformed positive electrode plate is immersed in the electrolyte solution containing sulfuric acid in the container of the lead-acid battery. However, the formation may be performed before the lead-acid battery or the element is assembled.

(Separator)

A separator is disposed between the negative electrode plate and the positive electrode plate. As the separator, a non-woven fabric and/or a microporous membrane are used. The thickness of the separator interposed between the negative electrode plate and the positive electrode plate may be selected according to the distance between the electrodes. The number of separators may be selected according to the number of electrodes.

The non-woven fabric is a mat in which fibers are entwined without being woven, and the fiber is the main component. In the non-woven fabric, for example, 60% by mass or more of the non-woven fabric is formed of the fiber. As the fiber, a glass fiber, a polymer fiber (a polyolefin fiber, an acrylic fiber, polyester fibers such as polyethylene terephthalate fiber), a pulp fiber, and the like can be used. Among them, the glass fiber is preferable. The non-woven fabric may include a component other than a fiber, for example, an acid-resistant inorganic powder and a polymer as a binder.

On the other hand, the microporous membrane is a porous sheet in which a component other than a fiber component is main component. For example, the microporous membrane is obtained by extruding a composition containing a pore-forming additive (such as a polymer powder and/or oil) into the shape of a sheet and then removing the pore-forming additive to form a pore. The microporous membrane is preferably made of a material having acid resistance, and it is preferable that the microporous membrane is mainly made of a polymer component. As the polymer component, polyolefins such as polyethylene and polypropylene are preferable.

The separator may be made of, for example, only the non-woven fabric or only the microporous membrane. Furthermore, as needed, the separator may be a laminate of the non-woven fabric and the microporous membrane, a material in which a different material or a similar material are laminated, or a material in which unevenness in different or similar materials are engaged.

The separator may be in the shape of a sheet or in the shape of a bag. One sheet-shaped separator may be disposed so as to be sandwiched between the positive electrode plate and the negative electrode plate. Further, the plate may be disposed so as to be sandwiched by one sheet-shaped separator in a bent state. In this case, one of the positive electrode plate and the negative electrode plate sandwiched by the bent sheet-shaped separator and the other of the negative electrode plate and the positive electrode plate may be overlapped with each other, and one of the positive electrode plate and the negative electrode plate may be sandwiched by the bent sheet-shaped separator and may be overlapped with the other electrode plate. Further, the sheet-shaped separator may be bent in a bellows shape, and the positive electrode plate and the negative electrode plate may be sandwiched in the bellows-shaped separator so that the separator is interposed between electrode plates. When the separator bent in a bellows shape is used, the separator may be disposed along a vertical direction (for example, the bent part is parallel to the vertical direction). In the bellows-shaped separator, concave parts are alternately formed on both main surface sides of the separator. Since lug parts are usually formed on the upper part of the positive electrode plate and the negative electrode plate, when the separator is disposed so that the bent part is along a horizontal direction of the lead-acid battery, the positive electrode plate and a negative electrode plate are disposed only in the concave part on one main surface side of the separator (that is, a double separator is interposed between the adjacent positive electrode plate and negative electrode plate). When the separator is disposed so that the bent part is along the vertical direction of the lead-acid battery, the positive electrode plate can be accommodated in the concave part on one main surface side and the negative electrode plate can be accommodated in the concave part on the other main surface side (that is, a single separator can be interposed between the adjacent positive electrode plate and negative electrode plate) When a bag-shaped separator is used, the bag-shaped separator may accommodate the positive electrode plate or the negative electrode plate.

The separator has a first rib on the first surface on a positive electrode plate side and a second rib on a second surface on the negative electrode plate side. That is, the separator has a base part, the first rib projecting from the first surface of the base part on the positive electrode plate side, and a second rib projecting from the second surface of the base part on the negative electrode plate side. The base part is a flat plate-shaped part that forms a main part of the separator. The height of each rib means the height from the surface of the base part. Therefore, the sum of the thickness of the base part, the height of the first rib, and the height of the second rib is the total thickness of the separator.

From the viewpoint of enhancing the effect of suppressing the gas stagnation, it is desirable that the ribs are uniformly provided along the upper/lower direction of the lead-acid battery as a line, for example. The rib is desirably formed continuously or intermittently from the upper end to the lower end of the separator, but it is sufficient that the rib is formed to, for example, 80% or more of the distance from the upper end to the lower end of the separator. In the present specification, an upper/lower direction of the lead-acid battery means the vertical direction.

The shape of the cross section perpendicular to the length direction of the rib may be quadrangles such as a rectangle and a square, a trapezoid, an arc-shaped quadrangle, or a quadrangle with a rounded top.

The thickness of the base part is, for example, preferably 0.2 mm or more, more preferably 0.3 mm or more from the viewpoint of ensuring sufficient strength of the separator. Further, from the viewpoint of reducing the internal resistance of the lead-acid battery, the thickness of the base part is preferably 0.8 mm or less, and more preferably 0.6 mm or less. The thickness of the base part is determined by averaging the values measured at any ten points on the base part.

The width of the rib may be, for example, 0.02 mm to 2.5 mm, and may be 0.04 mm to 2.0 mm or 0.04 mm to 1.5 mm. Further, the pitch of the ribs (that is, the minimum distance between the centers in a width direction of each rib in a pair of ribs that are closest to each other) may be, for example, 0.4 mm to 20 mm, and may be 0.6 mm to 15 mm. When each rib is provided in such a form, the effect of suppressing the gas stagnation is likely to be uniformly obtained over the entire surface of the plate, and the mechanical strength of the separator is improved, so that the rib is less likely to be collapsed and the separator is less likely to be bent. Furthermore, the resistance of the separator can be kept small.

The height and width of each rib are determined by averaging the values measured at any ten points on the arbitrarily selected rib. Similarly, the pitch P of each rib is determined by averaging the distances between the centers of any ten points of a pair of ribs that are arbitrarily selected and are closest to each other.

(Electrolyte solution)

The electrolyte solution is an aqueous solution containing sulfuric acid, and may be gelled as needed. The electrolyte solution may be a cation (for example, metal cations such as a sodium ion, a lithium ion, a magnesium ion, and/or an aluminum ion) and/or an anion (for example, an anion other than sulfate anions such as phosphate ion) as needed.

The specific gravity of the electrolyte solution at 20°C in a lead-acid battery in a full charge state is, for example, 1.20 or more, and may be 1.25 or more. The specific gravity of the electrolyte solution at 20°C is 1.35 or less, preferably 1.32 or less. The lower limit values and the upper limit values can be arbitrarily combined. The specific gravity of the electrolyte solution at 20°C may be 1.20 or more and 1.35 or less, 1.20 or more and 1.32 or less, 1.25 or more and 1.35 or less, or 1.25 or more and 1.32 or less.

The lead-acid battery according to one aspect of the present invention is described together below.

(1) A lead-acid battery including:

a positive electrode plate;
a negative electrode plate;
an electrolyte solution;
a separator interposed between the positive electrode plate and the negative electrode plate; and
wherein the negative electrode plate includes a negative electrode current collector and a negative electrode material,
the negative electrode material has a density of 3.5 g/cm$^3$ or less,
the negative electrode material contains an organic condensate,
the separator has a first rib on a first surface on a positive electrode plate side and a second rib on a second surface on a negative electrode plate side.

(2) The lead-acid battery according to (1), wherein
the organic condensate contains a unit of an aromatic compound, and
the aromatic compound has a sulfur-containing group.
(3) The lead-acid battery according to (2), wherein the aromatic compound contains at least one kind selected from the group consisting of a bisallene compound and a monocyclic compound.
(4) The lead-acid battery according to (3), wherein the bisallene compound contains a bisphenol compound.
(5) The lead-acid battery according to (3) or (4), wherein the monocyclic compound contains a hydroxyallene compound.
(6) The lead-acid battery according to any one of (1) to (5), wherein a sulfur element content in the organic condensate is 2000 µmol/g or more.
(7) The lead-acid battery according to any one of (1) to (6), wherein a content of the organic condensate in the negative electrode material is 0.03% by mass or more and 0.3% by mass or less.
(8) The lead-acid battery according to any one of (1) to (7), wherein a height of the positive electrode plate and a height of the negative electrode plate are 160 mm or more, respectively.
(9) The lead-acid battery according to any one of (1) to (7), wherein the height of the positive electrode plate and the height of the negative electrode plate are 200 mm or more, respectively.
(10) The lead-acid battery according to any one of (1) to (7), wherein the height of the positive electrode plate and the height of the negative electrode plate are 270 mm or more, respectively.
(11) The lead-acid battery according to any one of (1) to (10), wherein a distance between the positive electrode plate and the negative electrode plate is 1.3 mm or less.
(12) The lead-acid battery according to any one of (1) to (10), wherein the distance between the positive electrode plate and the negative electrode plate is 1.0 mm or less.
(13) The lead-acid battery according to any one of (1) to (12), wherein a height of the first rib and a height of the second rib are 0.1 mm or more, respectively.

(14) The lead-acid battery according to any one of (1) to (13), wherein the height of the second rib is 10% to 70% of a total thickness of the separator.

The lead-acid battery can be obtained by a manufacturing method including a step of assembling the lead-acid battery by accommodating the positive electrode plate, the negative electrode plate, and the electrolyte solution in the container. In the step of assembling the lead-acid battery, the separator is usually disposed so as to be interposed between the positive electrode plate and the negative electrode plate. The step of assembling the lead-acid battery may include a step of forming the positive electrode plate and/or the negative electrode plate as needed after the step of accommodating the positive electrode plate, the negative electrode plate, and the electrolyte solution in the container. The positive electrode plate, the negative electrode plate, the electrolyte solution, and the separator are prepared respectively before being accommodated in the container.

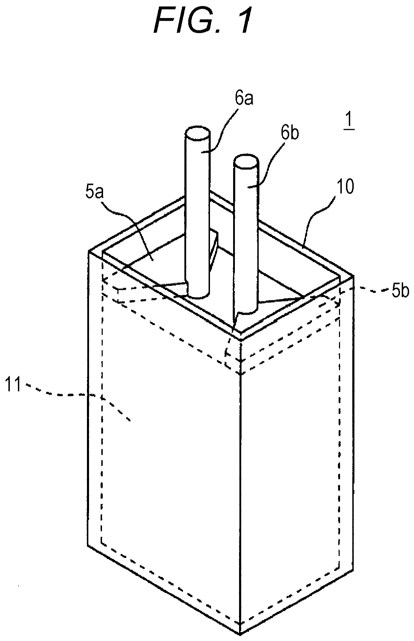

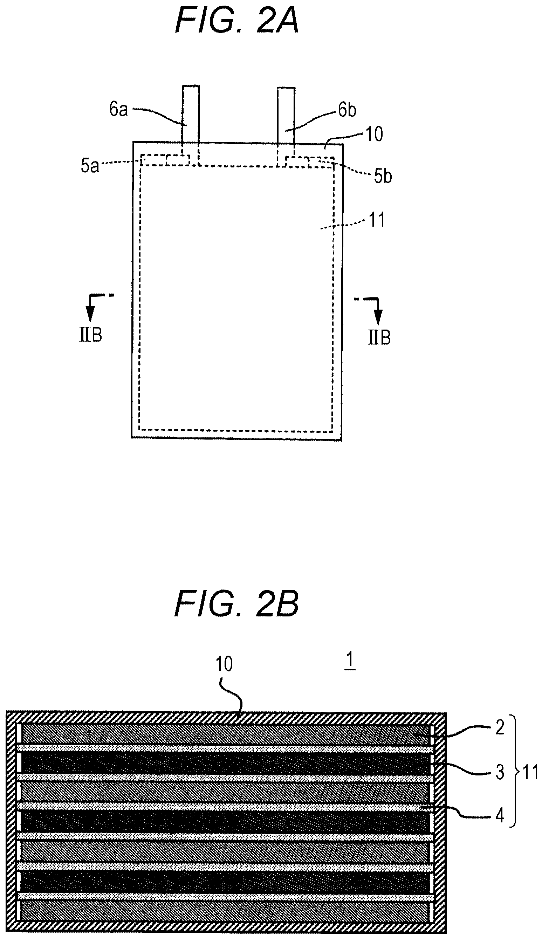

FIG. 1 is a perspective view schematically showing an example in which a lid of a lead-acid battery according to an embodiment of the present invention is removed. FIG. 2A is a front view of the lead-acid battery of FIG. 1, and FIG. 2B is an aligned section view taken along line IIB-IIB of FIG. 2A.

A lead-acid battery 1 includes a container 10 that accommodates an element 11 and an electrolyte solution (not shown). The element 11 is configured by laminating a plurality of negative electrode plates 2 and a plurality of positive electrode plates 3 via a separator 4.

A lug part (not shown) for collecting electricity projecting upward is provided on the upper part of each of negative electrode plates 2. The lug part (not shown) for collecting electricity projecting upward is also provided on the upper part of each of positive electrode plates 3. The lug parts of the negative electrode plate 2 are connected and integrated by a negative electrode strap 5a. Similarly, the lug parts of the positive electrode plate 3 are also connected and integrated by a positive electrode strap 5b. A negative pole 6a is fixed to the negative electrode strap 5a, and a positive pole 6b is fixed to the positive electrode strap 5b.

EXAMPLES

Hereinafter, the present invention is specifically described based on Examples and Comparative Examples, and the present invention is not limited to the following Examples.

<<Lead-acid battery R1>>

(a) Preparation of negative electrode plate

A lead powder, barium sulfate, a carbon black, and a sodium lignin sulfonate (sulfur element content: 600 $\mu$mol/g, Mw = 5200) as a raw material are mixed with an appropriate amount of sulfuric acid aqueous solution to obtain a negative electrode paste. At this time, the components are mixed so that the content of barium sulfate is 1.5% by mass, the content of the carbon black is 0.3% by mass, and the content of the organic expander is 0.1% by mass in the negative electrode material required by the above procedure. The negative electrode paste is filled in a mesh part of a cast grid made of Pb-Sb alloy which is a negative electrode current collector, and cured and then dried the negative electrode current collector to obtain an unformed negative electrode plate. At this time, the formulation of the negative electrode paste is adjusted so that the density (NAM density) of the negative electrode material after formation is 3.7 g/cm$^3$.

The height of the negative electrode plate shall be 278 mm.

(b) Preparation of positive electrode plate

A clad type positive electrode plate is prepared by the following procedure.

First, a plurality of spines, in which one end part in the length direction is integrated with a current collecting section provided with the lug part, is accommodated in a plurality of tubes. A resin upper linking seat is formed by covering the current collecting section and one end part of the tube in the length direction on the current collecting section side with a resin so that the lug part is exposed. The material of the spine and the current collecting section is a Pb-Sb alloy. As the tube, a porous tube made of a glass fiber is used.

A positive electrode slurry prepared by mixing a lead powder (containing 80% by mass of lead oxide and 20% by mass of a metallic lead), red lead, water, and dilute sulfuric acid is filled through the opening at the other end part in the length direction of the tube. The mass ratio of a lead powder and red lead shall be 9 : 1. Then, the opening at the other end part of the tube is sealed with a lower linking seat and dried. In this way, an unformed clad type positive electrode plate is prepared. The height of the positive electrode plate shall be 278 mm.

(c) Separator

A microporous membrane containing a polyethylene and silica particles is prepared as a separator. The thickness of the base part of the separator is 0.4 mm, and the first rib having a height of 0.1 mm is provided along the upper/lower direction of the lead-acid battery only on the first surface on the positive electrode plate side. The total thickness of the separator is 0.5 mm. The width of the first rib is 0.8 mm, and the pitch of the first rib is 9.0 mm.

(d) Preparation of test battery

A liquid type battery with a rated voltage of 2 V and a rated 5 hour rate capacity of 165 Ah is prepared. The element of the test battery is formed of three positive electrode plates and four negative electrode plates sandwiching the positive electrode plates. The positive electrode plate and the negative electrode plate are laminated with a separator interposed therebetween to form an element. The element is accommodated in a polyethylene container together with an electrolyte solution (sulfuric acid aqueous solution), covered with a lid and formed in the container to prepare a liquid type lead-acid battery R1. The specific gravity of the electrolyte solution after formation at 20°C is 1.28. The distance between the positive electrode plate and the negative electrode plate is 0.6 mm.

«Lead-acid battery R2»

The battery R2 is prepared in the same manner as the battery R1 except that, in the preparation of the negative electrode plate, the formulation of the negative electrode paste is adjusted so that the negative electrode material density after formation is 2.9 g/cm$^3$.

«Lead-acid battery R3»

The battery R3 is prepared in the same manner as the battery R2 except that, in the preparation of the negative electrode plate, the following condensate A is used as the organic expander instead of the lignin sulfonic acid. Condensate A: Condensate of bisphenol A compound with sulfonic acid group introduced and bisphenol S compound with formaldehyde (sulfur element content: 3800 $\mu$mol/g, Mw = 8000)

«Lead-acid battery R4»

The battery R4 is prepared in the same manner as the battery R2 except that as a separator, a separator in which the thickness of the base part is 0.4 mm, and which includes a first rib having a height of 0.1 mm on the first surface of the positive electrode plate side and a second rib having a height of 0.1 mm on the second surface of the negative electrode plate side (total thickness: 0.6 mm) is used. The direction, width, and pitch of the second rib are the same as those of the first rib. The distance between the positive electrode plate and the negative electrode plate is 0.6 mm.

<<Lead-acid battery E1>>

The battery E1 is prepared in the same manner as the battery R4 except that, in the preparation of the negative electrode plate, the condensate A is used as the organic expander instead of the lignin sulfonic acid as in battery R3.

[Evaluation 1]

The charge-discharge cycle of the lead-acid battery was repeated under the following conditions in a water tank at 10°C $\pm$ 2°C.

<Test conditions>

Discharge: Discharge for 3 hours with a current (A) that is 0.25 times the value described as the rated capacity (Ah)
Charge: Charge 130% of the discharge capacity with a current (A) 0.195 times the value described as the rated capacity (Ah)

Table 1 shows the relation between the number of cycles of batteries R1 to R4 and E1 and the capacity retention ratio.

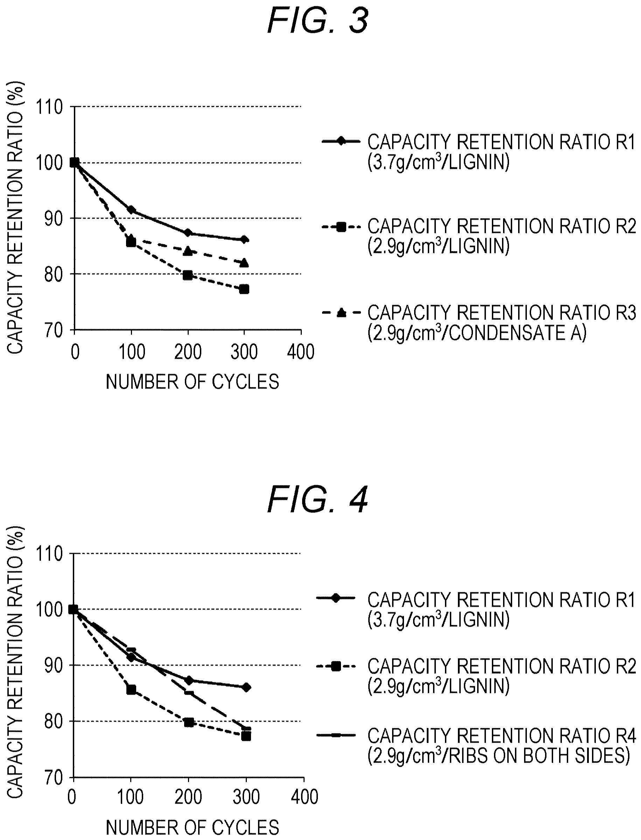

Furthermore, FIG. 3 shows the relation between the number of cycles of batteries R1 to R3 and the capacity retention ratio.

Furthermore, FIG. 4 shows the relation between the number of cycles of batteries R1, R2, and R4 and the capacity retention ratio.

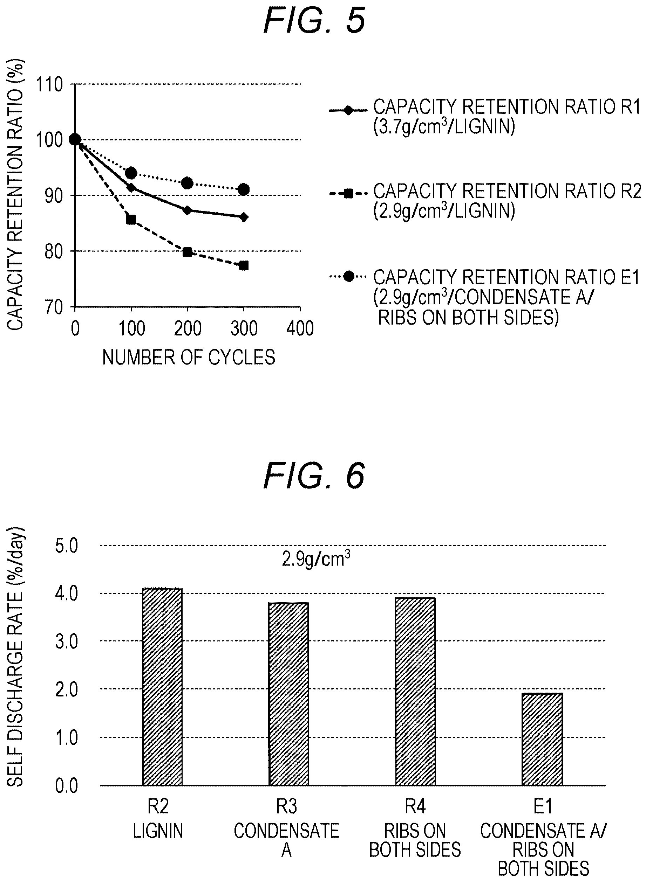

Furthermore, FIG. 5 shows the relation between the number of cycles of batteries R1, R2, and E1 and the capacity retention ratio.

[Table 1]

| Number of Cycles | | | | 0 | 100 | 200 | 300 |
|---|---|---|---|---|---|---|---|
| Capacity Retention Ratio | R1 | 3.7g/cm$^3$ | Lignin | Rib on One Side | 100 | 91.4 | 87.3 | 86.1 |
| | R2 | 2.9g/cm$^3$ | Lignin | Rib on One Side | 100 | 85.6 | 79.8 | 77.4 |
| | R3 | 2.9g/cm$^3$ | Condensate A | Rib on One Side | 100 | 86.3 | 84.2 | 82.1 |
| | R4 | 2.9g/cm$^3$ | Lignin | Ribs on Both Sides | 100 | 92.8 | 85.1 | 78.8 |
| | E1 | 2.9g/cm$^3$ | Condensate A | Ribs on Both Sides | 100 | 94.0 | 92.2 | 91.1 |

In Table 1 and FIG. 3, the capacity retention ratio of the battery R2 is significantly lower than that of the battery R1. That is, the capacity retention ratio of the battery R2, which uses less lead than the battery R1 and reduced the negative electrode material density to increase the utilization factor of the active material, is significantly decreased. It is considered that this is because the negative electrode material expands and falls off during the deep discharge cycle, and the expansion of the electrode material causes significant gas stagnation between the electrodes, and promotes stratification.

Furthermore, in the battery R3 in which the sodium lignin sulfonate in the battery R2 is changed to the condensate A, the capacity retention ratio is the same as that of the battery R2 up to 100 cycles. This is because the gas stagnation that occurs in battery R3 is the same degree as that of battery R2 in the initial stage of the cycle when the negative electrode material does not expand so much. However, in the battery R3 in which the organic expander is changed to SA, the expansion of the negative electrode material is suppressed, so that the improvement in the decrease in the capacity retention ratio becomes conspicuous as the deep discharge cycle progresses. In other words, the effect of improving the capacity retention ratio is not observed in the initial stage of the cycle when the expansion of the negative electrode material is small.

Further, in Table 1 and FIG. 4, in the battery R4 in which the separator in the battery R2 is changed to a separator having ribs on both sides, the gas stagnation between the electrodes is suppressed, so that the capacity retention ratio is improved in the initial stage of the deep discharge cycle. However, since the expansion of the negative electrode material progresses considerably, the ribs are collapsed as the deep discharge cycle progresses, and thus the effect of suppressing the gas stagnation by providing ribs on both sides of the separator is gradually reduced. As a result, after 300 cycles, the superiority of the capacity retention ratio with respect to the battery R1 can hardly be obtained.

On the other hand, as shown in Table 1 and FIG. 5, in the battery E1 using the condensate A as the organic expander and using the separator having ribs on both sides, a good capacity retention ratio can be achieved from the initial stage of the cycle to after 300 cycles. It is considered that this is because the expansion of the negative electrode material is suppressed, and the gas stagnation suppressing effect is remarkably exhibited by providing ribs on both sides of the separator.

[Evaluation 2]

Next, the self discharge rate (%/day) of the batteries R2 to R4 and E1 at 300 cycles in an environment of 60°C is determined. The self discharge rate in an environment of 60°C is determined by the following procedure.

(i) A fully charged battery before being left to stand is discharged with a current (A) that is 0.2 times the value described as the rated capacity (Ah) until it reaches 1.7 V/cell, and the discharge capacity C 1 before being left to stand is measured, and then the battery is fully charged.
(ii) The full charged battery is left to stand in an environment of 60°C $\pm$ 2°C for 14 days.
(iii) The discharge capacity C2 of the battery after being left to stand in an environment of 60°C $\pm$ 2°C is measured, and then the battery is fully charged.
(iv) Again, the fully charged battery is discharged with a current (A) of 0.2 times the value described the rated capacity (Ah) until it reaches 1.7 V/cell, and then the discharge capacity C3 is measured.

The self discharge amount RSD (%/day) per day is calculated from the following equation.

$$\mathrm{RSD} = [(C1 + C3 - 2C2)/14\,(C1 + C3)] \times 100$$

Table 2 and FIG. 6 show the relation between the battery configuration and the self discharge rate.

[Table 2]

| Battery | R2 | R3 | R4 | E1 |
|---|---|---|---|---|
| NAM Density (g/cm$^3$) | 2.9 | 2.9 | 2.9 | 2.9 |
| Organic Expander | Lignin | Condensate A | Lignin | Condensate A |
| Disposition of Rib | One Side | One Side | Both Sides | Both Sides |
| Self Discharge Rate (%/day) | 4.1 | 3.8 | 3.9 | 1.9 |

Table 2 and FIG. 6 show that the self discharge reaction is promoted in the battery R2 in which the significant gas stagnation occurs. The self discharge reaction is promoted by increasing a specific gravity of the electrolyte solution. The specific gravity of the electrolyte solution gradually increases because the amount of water addition that should be originally refilled is not refilled due to the gas stagnation. Such self discharge is effectively suppressed only when an organic expander other than the lignin is used and the separator having ribs on both sides is used (for example, in the case of battery E1). This is because the gas stagnation is reduced to be less likely to increase the specific gravity of the electrolyte solution.

[Evaluation 3]

The low-temperature high-rate discharge performance is evaluated under the following conditions.

(i) When a lead-acid battery in a full charge state in the initial stage is discharged with a current (A) that is once the value described as the rated capacity (Ah) at -15°C ± 2°C until the discharge voltage reaches 1.0 V/cell, the discharge duration is measured.
(ii) The battery is discharged at 10°C ± 2°C with a current (A) that is 0.25 times the value described as the rated capacity (Ah) for 3 hours, and then a deep discharge cycle of charging for 5 hours with a current (A) that is 0.195 times the value described as the rated capacity (Ah) is repeated for 300 cycles.
(iii) When a lead-acid battery in a full charge state after 300 cycles is discharged with a current (A) that is once the value described as the rated capacity (Ah) at -15°C ± 2°C until the discharge voltage reaches 1.0 V/cell, the discharge duration is measured.

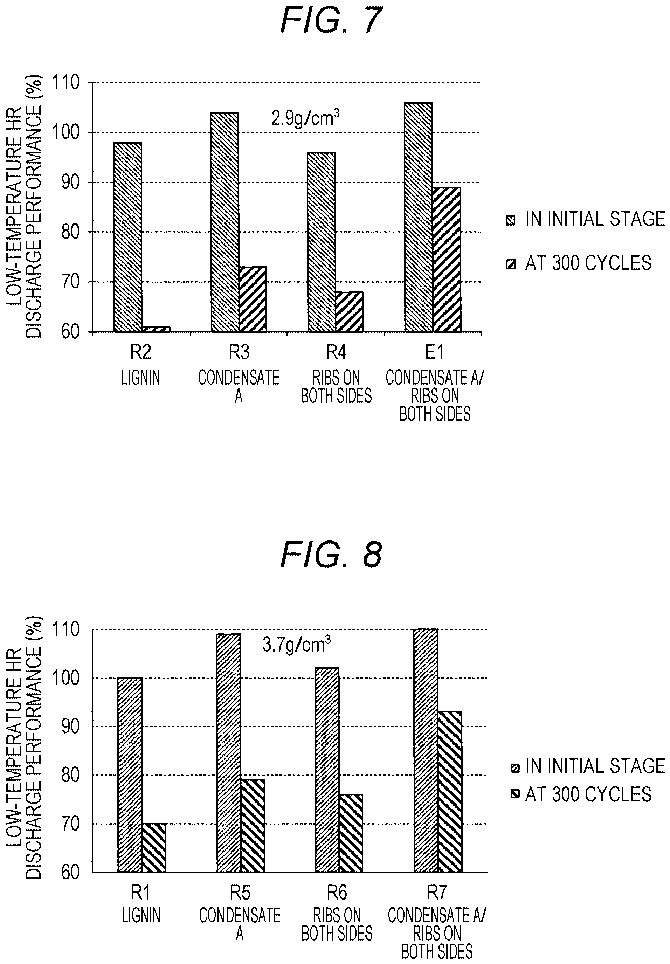

Table 3 and FIG. 7 show the relative values of the low-temperature high-rate (HR) discharge performance of batteries R2 to R4 and E1 in the initial stage and at 300 cycles when the initial low-temperature HR discharge performance of R1 is 100.

[Table 3]

| Battery | R2 | R3 | R4 | E1 |
|---|---|---|---|---|
| NAM Density (g/cm$^3$) | 2.9 | 2.9 | 2.9 | 2.9 |
| Organic Expander | Lignin | Condensate A | Lignin | Condensate A |
| Disposition of Rib | One Side | One Side | Both Sides | Both Sides |
| Low-Temperature HR Discharge Performance in Initial Stage | 98 | 104 | 96 | 106 |
| Low-Temperature HR Discharge Performance at 300 Cycles | 61 | 73 | 68 | 89 |
| Rate of Decrease in Low-Temperature HR Discharge Performance | -38% | -30% | -29% | -16% |

«Lead-acid battery R5»

The battery R5 is prepared in the same manner as the battery R1 except that, in the preparation of the negative electrode plate, the condensate A is used as the organic expander instead of the lignin sulfonic acid.

«Lead-acid battery R6»

The battery R6 is prepared in the same manner as the battery R1 except that a separator having the ribs on both sides (total thickness: 0.6 mm) is used as the separator like the battery R4.

«Lead-acid battery R7»

The battery R7 is prepared in the same manner as the battery R6 except that, in the preparation of the negative electrode plate, the condensate A is used as the organic expander instead of the lignin sulfonic acid.

The low-temperature high-rate discharge performance of batteries R1 and R5 to R7 in the initial stage and at 300 cycles is measured according to the procedure of Evaluation 3. The results are shown in Table 4 and FIG. 8.

[Table 4]

| Battery | R1 | R5 | R6 | R7 |
|---|---|---|---|---|
| NAM Density (g/cm$^3$) | 3.7 | 3.7 | 3.7 | 3.7 |
| Organic Expander | Lignin | Condensate A | Lignin | Condensate A |
| Disposition of Rib | One Side | One Side | Both Sides | Both Sides |
| Low-Temperature HR Discharge Performance in Initial Stage | 100 | 109 | 102 | 110 |
| Low-Temperature HR Discharge Performance at 300 Cycles | 70 | 79 | 76 | 93 |
| Rate of Decrease in Low-Temperature HR Discharge Performance | -30% | -28% | -25% | -15% |

From Tables 3 and 4 and FIGS. 7 and 8, it can be understood that the degree of improvement in the low-temperature high-rate (HR) discharge performance at 300 cycles becomes remarkable when the negative electrode material density is reduced. Specifically, as shown in Table 3, when the negative electrode material density is 2.9 g/cm$^3$, the improvement range of the reduction rate at 300 cycles with respect to the initial stage of the battery E1 with respect to the battery R2 is 22% (38% to 16%). On the other hand, as shown in Table 4, when the negative electrode material density is 3.7 g/cm$^3$, the improvement range of the reduction rate of the battery R7 with respect to the battery R1 is 15% (30% to 15%). It is considered that such a difference is related to the reduction of the gas stagnation by the separator having the ribs on both sides, and the increase in the effective plate area that can contribute to the discharge. The amount the gas stagnation is saturated at 300 cycles.

«Lead-acid batteries E2 to E4»

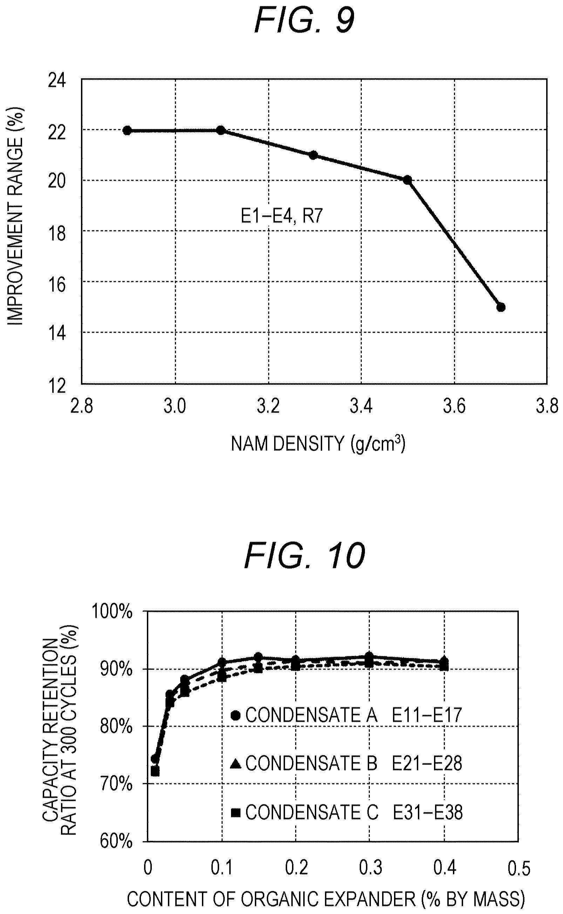

The batteries E2 to E4 are prepared in the same manner as the battery E1 except that, in the preparation of the negative electrode plate, the formulation of the negative electrode paste is adjusted so that the density of the negative electrode material (NAM) after formation is the value shown in Table 5. In addition, according to the procedure of Evaluation 2, the low-temperature high-rate discharge performance in the initial stage and at 300 cycles of batteries E2 to E4 was measured, and the improvement range of the reduction rate of the low-temperature high-rate discharge performance at 300 cycles with respect to the initial stage (improvement range with respect to the case of using a separator using the lignin and having the ribs on only one side) is determined in the same manner as the improvement range of the battery E1 with respect to the battery R2. The results are shown in Table 5 and FIG. 9.

[Table 5]

| Battery | R7 | E2 | E3 | E4 | E1 |
|---|---|---|---|---|---|
| NAM Density (g/cm$^3$) | 3.7 | 3.5 | 3.3 | 3.1 | 2.9 |

(continued)

| Battery | R7 | E2 | E3 | E4 | E1 |
|---|---|---|---|---|---|
| Organic Expander | Condensate A | Condensate A | Condensate A | Condensate A | Condensate A |
| Disposition of Rib | Both Sides | Both Sides | Both Sides | Both Sides | Both Sides |
| Improvement Range of Rate of Decrease in Low-Temperature HR Discharge Performance (%) | 15 | 20 | 21 | 22 | 22 |

As can be seen from Table 5 and FIG. 9, the improvement range of the rate of decrease in low-temperature high-rate discharge performance at 300 cycles with respect to the initial stage becomes large when the negative electrode material density is 3.5 g/cm$^3$ or less.

On the other hand, when the negative electrode material density is not reduced, that is, in the case of the standard density (3.7 g/cm$^3$), even when the condensate A and the separator having the ribs on both sides are combined, the improvement range of the reduction rate is insufficient.

«Lead-acid batteries E11 to E17»

The batteries E11 to E17 are prepared in the same manner as the battery E1 except that the components were mixed so that the content of the condensate A in the negative electrode material becomes the values shown in Table 6A, and the capacity retention ratio at 300 cycles is measured according to the procedure of Evaluation 1 The results are shown in Table 6A and FIG. 10.

«Lead-acid batteries E21 to E28»

The batteries E21 to E28 are prepared in the same manner as the batteries E1 and E11 to E17 except that the following condensate B is used instead of the condensate A as the organic expander in the negative electrode material, and the components are mixed so that the content of the condensate B in the negative electrode material becomes the values shown in Table 6B, and the capacity retention ratio at 300 cycles is measured according to the procedure of Evaluation 1. The results are shown in Table 6B and FIG. 10
Condensate B: Condensate of bisphenol S compound and phenol sulfonic acid with formaldehyde (sulfur element content: 4000 $\mu$mol/g, Mw = 8000)

«Lead-acid batteries E31 to E38»

The batteries E31 to E38 are prepared in the same manner as the batteries E1 and E11 to E17 except that the following condensate C is used instead of the condensate A as the organic expander in the negative electrode material, and the components are mixed so that the content of the condensate B in the negative electrode material becomes the values shown in Table 6C, and the capacity retention ratio at 300 cycles is measured according to the procedure of Evaluation 1. The results are shown in Table 6C and FIG. 10.
Condensate C: Condensate of bisphenol A compound with sulfonic acid group introduced and phenol sulfonic acid with formaldehyde (sulfur element content: 3970 $\mu$mol/g, Mw = 8000)

[Table 6A]

| Battery | E11 | E12 | E13 | E1 | E14 | E15 | E16 | E17 |
|---|---|---|---|---|---|---|---|---|
| Condensate | A | A | A | A | A | A | A | A |
| NAM Density (g/cm$^3$) | 2.9 | 2.9 | 2.9 | 2.9 | 2.9 | 2.9 | 2.9 | 2.9 |
| Disposition of Rib | Both Sides | Both Sides | Both Sides | Both Sides | Both Sides | Both Sides | Both Sides | Both Sides |
| Content of A (% by mass) | 0.01 | 0.03 | 0.05 | 0.1 | 0.15 | 0.2 | 0.3 | 0.4 |

(continued)

| Battery | E11 | E12 | E13 | E1 | E14 | E15 | E16 | E17 |
|---|---|---|---|---|---|---|---|---|
| Capacity Retention Ratio | 74.3% | 85.6% | 88.1% | 91.1% | 92.1% | 91.6% | 92.2% | 91.3% |

[Table 6B]

| Battery | E21 | E22 | E23 | E24 | E25 | E26 | E27 | E28 |
|---|---|---|---|---|---|---|---|---|
| Condensate | B | B | B | B | B | B | B | B |
| NAM Density (g/cm$^3$) | 2.9 | 2.9 | 2.9 | 2.9 | 2.9 | 2.9 | 2.9 | 2.9 |
| Disposition of Rib | Both Sides | Both Sides | Both Sides | Both Sides | Both Sides | Both Sides | Both Sides | Both Sides |
| Content of B (% by mass) | 0.01 | 0.03 | 0.05 | 0.1 | 0.15 | 0.2 | 0.3 | 0.4 |
| Capacity Retention Ratio | 72.1% | 85.2% | 87.4% | 89.8% | 90.9% | 91.4% | 91.1% | 91.6% |

[Table 6C]

| Battery | E31 | E32 | E33 | E34 | E35 | E36 | E37 | E38 |
|---|---|---|---|---|---|---|---|---|
| Condensate | C | C | C | C | C | C | C | C |
| NAM Density (g/cm$^3$) | 2.9 | 2.9 | 2.9 | 2.9 | 2.9 | 2.9 | 2.9 | 2.9 |
| Disposition of Rib | Both Sides | Both Sides | Both Sides | Both Sides | Both Sides | Both Sides | Both Sides | Both Sides |
| Content of C (% by mass) | 0.01 | 0.03 | 0.05 | 0.1 | 0.15 | 0.2 | 0.3 | 0.4 |
| Capacity Retention Ratio | 72.3% | 84.1% | 85.9% | 88.6% | 90.1% | 90.5% | 91.0% | 90.5% |

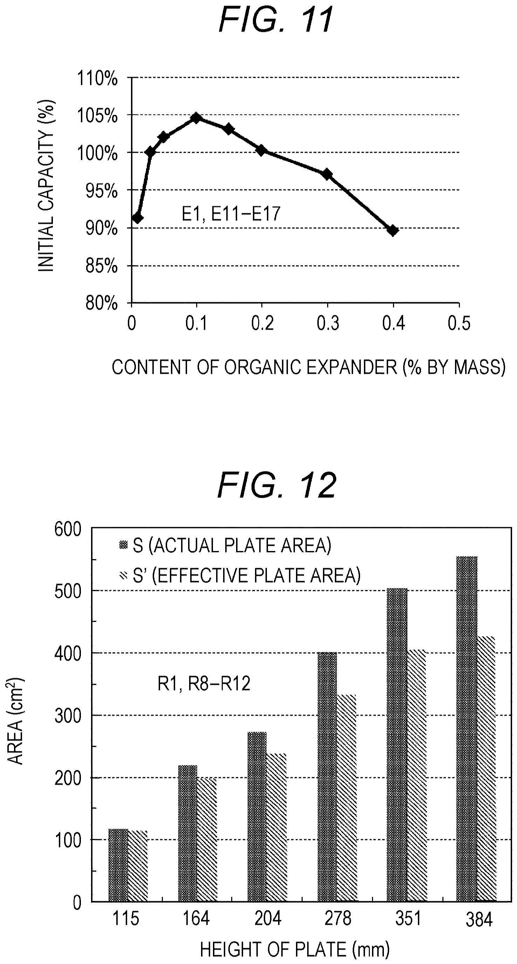

Next, the initial capacities of the batteries E1 and E11 to E17 are shown in Table 7 and FIG. 11. The initial capacity is a relative value when the battery E12 is 100%.

[Table 7]

| Battery | E11 | E12 | E13 | E1 | E14 | E15 | E16 | E17 |
|---|---|---|---|---|---|---|---|---|
| Content of Condensate A | 0.01 | 0.03 | 0.05 | 0.1 | 0.15 | 0.2 | 0.3 | 0.4 |
| Initial Capacity (%) | 91% | 100% | 102% | 105% | 103% | 100% | 97% | 90% |

As shown in Table 6A and FIG. 10, the effect of improving the capacity retention ratio by the organic expander tends to increase as the content of the organic expander increases. On the other hand, as shown in Table 7 and FIG. 11, from the viewpoint of ensuring a higher initial capacity, it can be said that it is desirable that the content of the organic expander in the negative electrode material is 0.03 to 0.3% by mass.

«Lead-acid batteries R8 to R12»

The batteries R8 to R12 are prepared in the same manner as the battery R1 except that the height of the positive electrode plate and the height of the negative electrode plate are changed as shown in Table 8 and the design is changed according to the heights of the plate. The effective plate areas of batteries R1 and R8 to R12 are determined as follows.

[Evaluation 4]

(Effective plate area)

The charge-discharge cycle of the lead-acid battery is repeated for 200 cycles under the following conditions at a temperature of 10°C $\pm$ 2°C. The amount the gas stagnation is stable in about 200 cycles and does not increase significantly any more.

Discharge: Discharge for 3 hours (up to DOD 75%) with a current (A) of 0.25 times that is the value described as the rated capacity (Ah)
Charge: Charge 130% of the discharge capacity with a current (A) 0.195 times the value described as the rated capacity (Ah)

After 200 cycles of charge-discharge, the battery is disassembled in the discharged state. Since the part where the gas stays remains unreacted, a metallic luster is observed unlike the effective part of the negative electrode plate. The area of the metallic luster is determined, and the effective plate area is calculated by subtracting the area of the metallic luster from the actual area of the negative electrode plate (height of the plate $\times$ width of the plate).

Table 8 and FIG. 12 show the relation between the height H of the plate, the effective plate area S' at the 200th cycle, and the actual plate area S (height of the plate $\times$ width of the plate).

[Table 8]

| Battery | R8 | R9 | R10 | R1 | R11 | R12 |
|---|---|---|---|---|---|---|
| Organic Expander | Lignin | Lignin | Lignin | Lignin | Lignin | Lignin |
| NAM Density (g/cm$^3$) | 3.7 | 3.7 | 3.7 | 3.7 | 3.7 | 3.7 |
| Disposition of Rib | One Side | One Side | One Side | One Side | One Side | One Side |
| H (mm) | 115 | 164 | 204 | 278 | 351 | 384 |
| S (cm$^2$) | 116 | 220 | 274 | 400 | 505 | 552 |
| S' (cm$^2$) | 114 | 198 | 238 | 332 | 404 | 425 |
| ∆S (S-S') | 2 | 22 | 36 | 68 | 101 | 127 |
| ∆S/S (%) | 1.72 | 10.0 | 13.1 | 17.0 | 20.0 | 23.0 |

From Table 8 and FIG. 12, it can be understood that the amount the gas stagnation increases as the height of the plate increases, and a large difference occurs between the effective plate area S' and the actual plate area S. Furthermore, in the battery R1 with a plate height of 115 mm (that is, 160 mm or less), the height of the plate is low, so the amount of gas stagnation is small, and gas escapes by leaving the battery to stand. Therefore, the difference between the effective plate area S' and the actual plate area is very small.

«Lead-acid battery R13»

The battery R13 is prepared in the same manner as the battery R1 except that the thickness of the base part is 0.4 mm and the first rib having a height of 0.1 mm is provided only on the second surface on the negative electrode plate side.

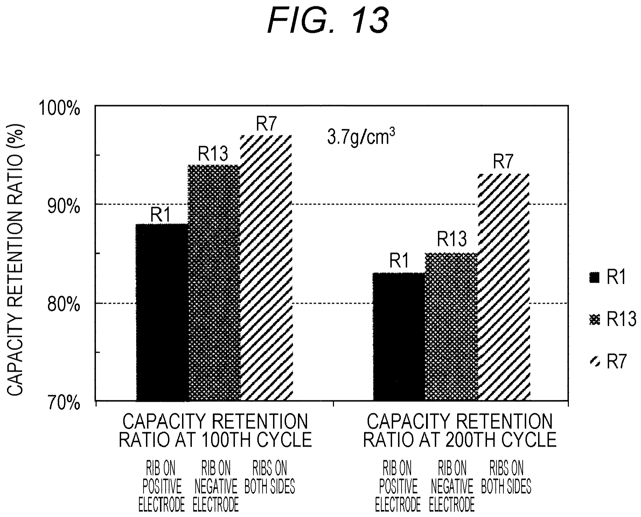

Table 9 and FIG. 13 show the capacity retention ratios of the batteries R1, R7, and R13 at the 100th cycle and at the 200th cycle in comparison.

[Table 9]

| Battery | R1 | R13 | R7 |
|---|---|---|---|
| Disposition of Rib | Positive Electrode Side | Negative Electrode Side | Both Sides |
| NAM Density (g/cm$^3$) | 3.7 | 3.7 | 3.7 |
| 100th Cycle | 88% | 94% | 97% |
| 200th Cycle | 83% | 85% | 93% |

From Table 9 and FIG. 13, it can be understood that in the case of the battery R1 in which the separator has the first rib only on the positive electrode plate side, the gas stagnation becomes remarkable as the cycle progresses, the effective plate area S' is reduced, and the capacity retention ratio is significantly lowered. Furthermore, in the case of the battery R13 in which the separator has the second rib only on the negative electrode plate side, it can be understood that the gas stagnation is improved and the capacity retention ratio is improved up to the 100th cycle, but the capacity retention ratio is significantly lowered at the 200th cycle. This is because the rib is collapsed by the expansion of the negative electrode and the gas stagnation occurs. On the other hand, in the case of the battery R7 in which the separator has the ribs on both sides, the gas stagnation is improved even after 200 cycles, and an excellent capacity retention ratio is achieved. It is considered that this is because the presence of ribs on both sides increases the strength of the separator and makes it difficult for the ribs to be collapsed.

«Lead-acid batteries R14 to R18»

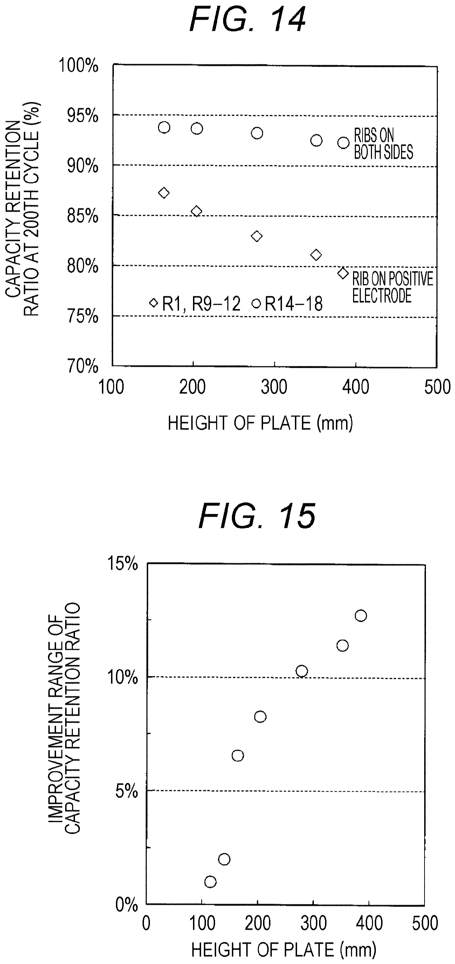

The batteries R14 to R18 are prepared in the same manner as batteries R1 and R9 to R12 except that the thickness of the base part is 0.4 mm, the first and second ribs with a height of 0.1 mm are provided on both the first and second surfaces, respectively, the distance between the positive electrode plate and the negative electrode plate is 0.6 mm, and the capacity retention ratio at the 200th cycle is measured according to the procedure of Evaluation 1.
Table 10 shows the capacity retention ratios of batteries 14 to R18 at the 200th cycle in comparison. FIG. 14 shows the relation between the height of the plate and the capacity retention ratio at the 200th cycle.

[Table 10]

| Battery | R14/R9 | R15/R10 | R16/R1 | R17/R11 | R18/R12 |
|---|---|---|---|---|---|
| Organic Expander | Lignin | Lignin | Lignin | Lignin | Lignin |
| Disposition of Rib | Both Sides | Both Sides | Both Sides | Both Sides | Both Sides |
| NAM Density (g/cm$^3$) | 3.7 | 3.7 | 3.7 | 3.7 | 3.7 |
| H (mm) | 164 | 204 | 278 | 351 | 384 |
| First Rib at 200th Cycle | 87.2% | 85.4% | 83.0% | 81.2% | 79.4% |
| Ribs on Both Sides at 200th Cycle | 93.8% | 93.7% | 93.3% | 92.6% | 92.1% |

«Lead-acid batteries R19 to R21»

The battery R19 (ribs on both sides) is prepared in the same manner as the battery R8 (rib on one side), except that the thickness of the base part is 0.4 mm and the first and second ribs with a height of 0.1 mm are provided on both the first and second surfaces, respectively. Furthermore, the battery R20 is prepared in the same manner as the battery R8 (rib on one side), and the battery R21 (ribs on both sides) is prepared in the same manner as the battery R19, except that the height of the plate is 140 mm. The capacity retention ratio of the batteries R19 to R21 at the 200th cycle is measured according to the procedure shown in Table 1, and the improvement range of the capacity retention ratio when the separator has the first rib and the second rib on both sides as compared with the case where the separator has the first rib only on the positive electrode plate side is determined.
Table 11 and FIG. 15 show the relation between the height of the plate and the improvement range of the capacity retention ratio in comparison.

[Table 11]

| Battery | R8 | R20 | R9 | R10 | R1 | R11 | R12 |
|---|---|---|---|---|---|---|---|
| Disposition of Rib | One Side | One Side | One Side | One Side | One Side | One Side | One Side |
| Battery | R19 | R21 | R14 | R15 | R16 | R17 | R18 |
| Disposition of Rib | Both Sides | Both Sides | Both Sides | Both Sides | Both Sides | Both Sides | Both Sides |
| H (mm) | 115 | 140 | 164 | 204 | 278 | 351 | 384 |
| Improvement Range (%) | 1% | 2% | 7% | 8% | 10% | 11% | 13% |

From Table 11 and FIG. 15, it can be understood that the battery having the first rib and the second rib on both sides of the separator has a significantly improved capacity retention ratio at the 200th cycle as compared with the battery having the first rib only on the positive electrode plate side, and the improvement range becomes more remarkable as the height of the plate increases.

[Evaluation 5]

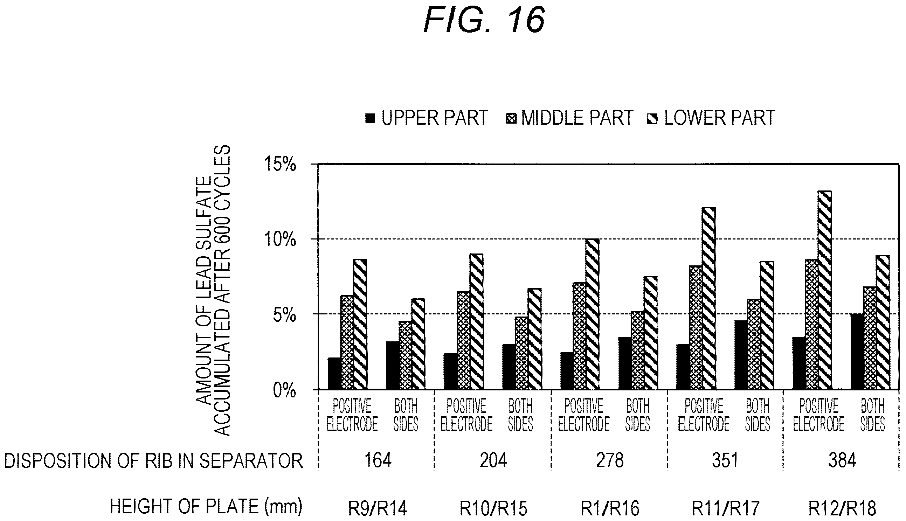

Table 12 and FIG. 16 show the relation between the amount of lead sulfate accumulated in the upper, middle and lower parts of the negative electrode plate and the height of the plate in comparison.
For the amount of lead sulfate, after repeating the charge-discharge cycle for 600 cycles on the upper surface of Evaluation 1, the cell is disassembled, the negative electrode plate is taken out, and divided into three equal parts in the upper and lower direction, and about 20 g of lead sulfate is collected from the central part of each part and mixed to prepare a sample of the negative electrode material. The washed and dried sample is crushed and burned at a high temperature. Sulfur contained in the negative electrode material is gasified to produce sulfur dioxide. The gas concentration of sulfur dioxide is measured using an infrared detector to determine the amount of sulfur contained in the sample. The ratio of the amount of lead atoms forming lead sulfate to the total amount of lead atoms contained in the sample is obtained.

[Table 12]

| H (mm) | 164 | | 204 | | 278 | | 351 | | 384 | |
|---|---|---|---|---|---|---|---|---|---|---|
| Battery | R9 | R14 | R10 | R15 | R1 | R16 | R11 | R17 | R12 | R18 |
| Rib | Positive electrode | Both Sides | Positive electrode | Both Sides | Positive electrode | Both Sides | Positive electrode | Both Sides | Positive electrode | Both Sides |
| Upper Part | 2.1% | 3.2% | 2.4% | 3.0% | 2.5% | 3.5% | 3.0% | 4.6% | 3.5% | 5.0% |
| Middle Part | 6.2% | 4.5% | 6.5% | 4.8% | 7.1% | 5.2% | 8.2% | 6.0% | 8.6% | 6.8% |
| Lower Part | 8.6% | 6.0% | 9.0% | 6.7% | 10% | 7.5% | 12% | 8.5% | 13% | 8.9% |

From Table 12 and FIG. 16, it can be understood that the battery in which the first rib and the second rib are provided on both sides of the separator suppresses the accumulation of lead sulfate in the negative electrode plate as compared with the battery in which the first rib is provided only on the positive electrode plate side. It can be understood that this is because the improved gas stagnation makes it easier for the electrolyte solution to circulate when the gas is generated, the charge-discharge reaction becomes uniform, and stratification is less likely to occur.

«Lead-acid batteries R22 to R29»

The batteries R22 to R29 are prepared in the same manner as the battery R1 which has a plate with a height of 278 mm, except that the distance between the positive electrode plate and the negative electrode plate (distance between electrodes) was changed as shown in Table 13. Then, the amount of gas stagnation is measured according to Evaluation 4.

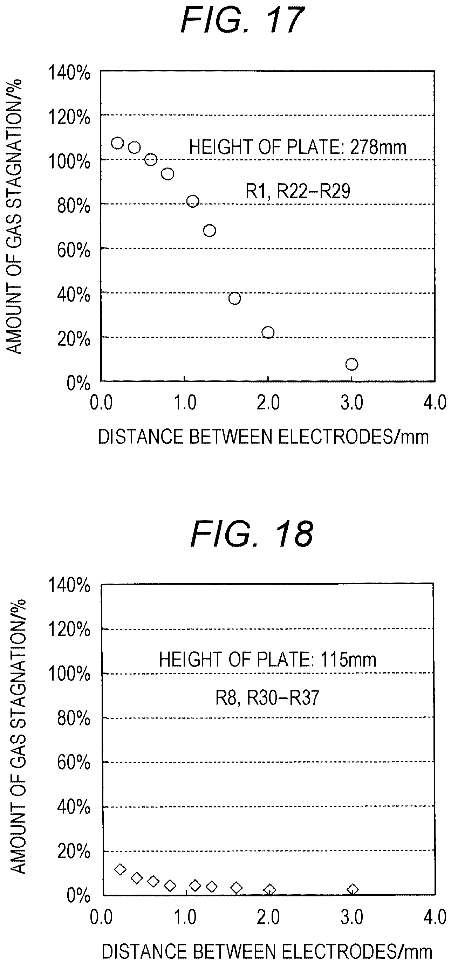

When the distance between the electrodes is 0.6 mm (battery R1), the amount of the gas stagnation is shown in Table 13 as a relative value with that distance as 100%. Furthermore, FIG. 17 shows the relation between the distance between electrodes and the amount of the gas stagnation.

[Table 13]

| Height of Plate: 278mm | | |
|---|---|---|
| Disposition of Rib: Positive Electrode Side | | |
| NAM Density: 3.7g/cm$^3$ | | |
| Battery | Distance Between Electrodes (mm) | Relative Value |
| R22 | 0.2 | 107% |
| R23 | 0.4 | 105% |
| R1 | 0.6 | 100% |
| R24 | 0.8 | 94% |
| R25 | 1.1 | 81% |
| R26 | 1.3 | 68% |
| R27 | 1.6 | 37% |
| R28 | 2.0 | 22% |
| R29 | 3.0 | 8% |

«Lead-acid batteries R30 to R37»

The batteries R30 to R37 are prepared in the same manner as the battery R8 which has a plate with a height of 115 mm, except that the distance between electrodes was changed as shown in Table 14. Then, the amount of gas stagnation is measured according to Evaluation 4.

Table 14 shows the amount of gas stagnation as a relative value with battery R1 as 100%. Furthermore, FIG. 18 shows the relation between the distance between electrodes and the amount of the gas stagnation.

[Table 14]

| Height of Plate: 115mm | | |
|---|---|---|
| Disposition of Rib: Positive Electrode Side | | |
| NAM Density: 3.7g/cm$^3$ | | |
| Battery | Distance Between Electrodes (mm) | Relative Value |
| R30 | 0.2 | 12% |
| R31 | 0.4 | 8% |
| R8 | 0.6 | 6% |
| R32 | 0.8 | 4% |

(continued)

| Height of Plate: 115mm | | |
| --- | --- | --- |
| Disposition of Rib: Positive Electrode Side | | |
| NAM Density: 3.7g/cm$^3$ | | |
| Battery | Distance Between Electrodes (mm) | Relative Value |
| R33 | 1.1 | 4% |
| R34 | 1.3 | 4% |
| R35 | 1.6 | 3% |
| R36 | 2.0 | 2% |
| R37 | 3.0 | 2% |

«Lead-acid batteries R38 to R45»

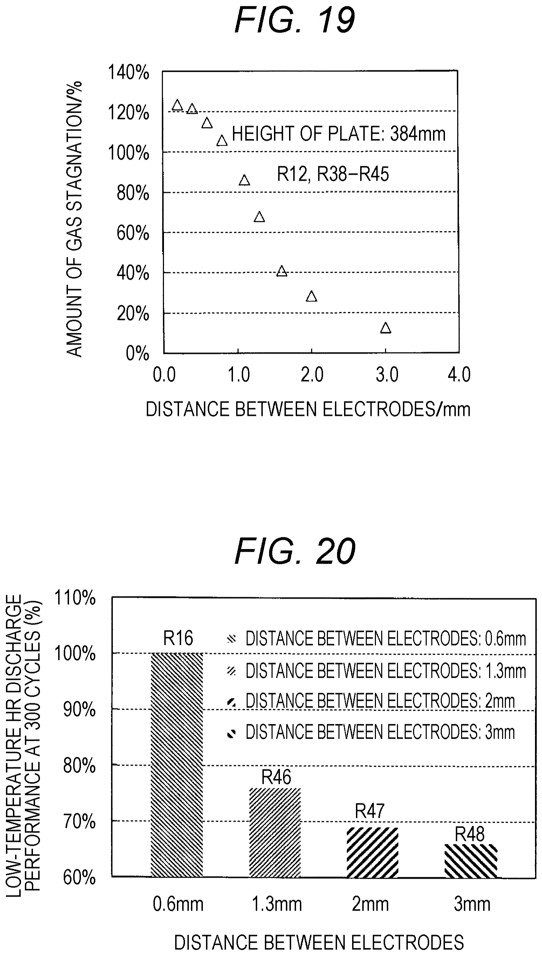

The batteries R38 to R45 are prepared in the same manner as the battery R12 which has a plate with a height of 384 mm, except that the distance between electrodes was changed as shown in Table 15. Then, the amount of gas stagnation is measured according to Evaluation 1.
The amount of the gas stagnation is shown in Table 15 as a relative value with the battery R1 as 100%. Furthermore, FIG. 19 shows the relation between the distance between electrodes and the amount of the gas stagnation.

[Table 15]

| Height of Plate: 384mm | | |
| --- | --- | --- |
| Disposition of Rib: Positive Electrode Side | | |
| NAM Density: 3.7g/cm$^3$ | | |
| Battery | Distance Between Electrodes (mm) | Relative Value |
| R38 | 0.2 | 124% |
| R39 | 0.4 | 122% |
| R12 | 0.6 | 115% |
| R40 | 0.8 | 106% |
| R41 | 1.1 | 86% |
| R42 | 1.3 | 68% |
| R43 | 1.6 | 41% |
| R44 | 2.0 | 29% |
| R45 | 3.0 | 13% |

From Tables 13 to 15 and FIGS. 17 to 19, it can be understood that when the distance between the electrodes is smaller than 1.3 mm, the gas tends to stay rapidly when the height of the plate is 160 mm or more. This tendency becomes more significant as the height of the plate increases. On the other hand, when the separator having the ribs on both sides is used, gas stagnation is significantly improved even when the height of the plate is 160 mm or more.
Table 16 shows the results of comparing the amount the gas stagnations of the batteries R1 and R16. The amount of the gas stagnation is shown in Table 16 as a relative value with the battery R1 as 100%.

[Table 16]

| Amount of Gas Stagnation | R1 | R16 |
| --- | --- | --- |
| Disposition of Rib | Positive Electrode Side | Both Sides |
| Height of Rib (mm) | 0.1 | 0.1/0.1 |

(continued)

| Amount of Gas Stagnation | R1 | R16 |
|---|---|---|
| 200th Cycle (mL) | 203 | 5 |
| Relative Value (%) | 100% | 2% |

From Table 16, it can be understood that when the ribs are provided on both sides of the separator, the rib having a height of 0.1 mm or more is sufficient from the viewpoint of suppressing the gas stagnation.

«Lead-acid batteries R46 to R48»

The batteries R46 to R48 are prepared in the same manner as the battery R16 which has a plate with a height of 278 mm, except that the distance between the positive electrode plate and the negative electrode plate (distance between electrodes) was changed as shown in Table 17. Furthermore, the low-temperature high-rate discharge performance is determined according to Evaluation 3.

Table 17 shows the relation between the distance between electrodes and low-temperature high-rate discharge performance. In addition, FIG. 20 shows the relation between the distance between electrodes and low-temperature high-rate discharge performance.

[Table 17]

| Height of Plate: 278mm | |
|---|---|
| Disposition of Rib: Both Sides | |
| NAM Density: 3.7g/cm$^3$ | |
| Battery | Distance Between Electrodes (mm) | Low-Temperature HR Discharge Performance |
| R16 | 0.6 | 100% |
| R46 | 1.3 | 76% |
| R47 | 2.0 | 69% |
| R48 | 3.0 | 66% |

From Table 17 and FIG. 20, it can be understood that the low-temperature high-rate discharge performance deteriorates when the distance between the electrodes exceeds 1.3 mm. It is considered that this is because the gas stagnation is improved by increasing the distance between the electrodes to 1.3 mm or more, but after 300 cycles, the positive electrode material is promoted to fall off due to the large distance between the electrodes.

«Lead-acid batteries R49 to R51»

The batteries R49, R50, and R51 are prepared in the same manner as the batteries R9, R1 and R12, except that, in the preparation of the negative electrode plate, the condensate A is used instead of the sodium lignin sulfonate as the organic expander, and the negative electrode material density after formation is changed to 2.9 g/cm$^3$.
Condensate A: Condensate of bisphenol A compound with sulfonic acid group introduced and bisphenol S compound with formaldehyde (sulfur element content: 3800 $\mu$mol/g, Mw = 8000)

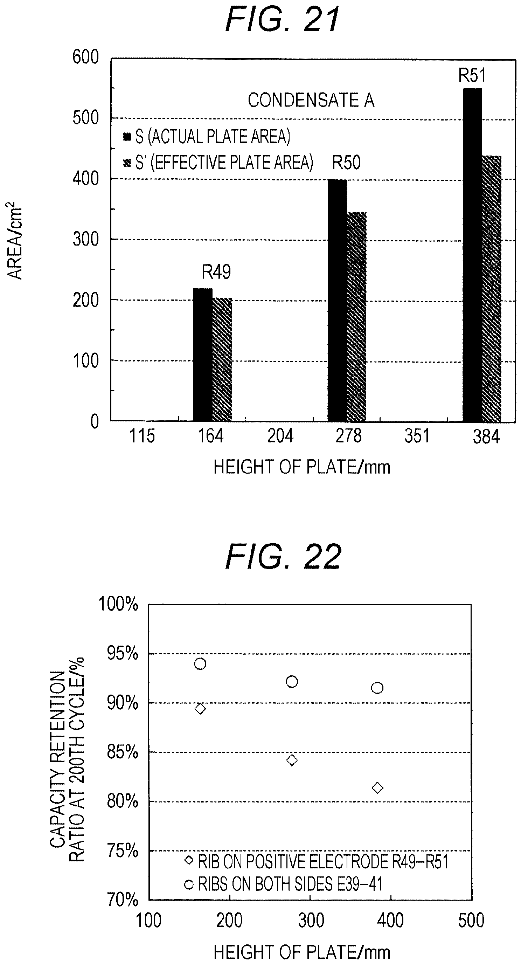

Table 18 and FIG. 21 show the relation between the height H of the plate using the condensate A, the effective plate area S' at the 200th cycle, and the actual plate area S (height of the plate × width of the plate).

[Table 18]

| Battery | R49 | R50 | R51 |
|---|---|---|---|
| Condensate | A | A | A |
| NAM Density (g/cm$^3$) | 2.9 | 2.9 | 2.9 |
| Disposition of Rib | Positive Electrode Side | Positive Electrode Side | Positive Electrode Side |
| H (mm) | 164 | 278 | 384 |

(continued)

| Battery | R49 | R50 | R51 |
|---|---|---|---|
| S (cm$^2$) | 220 | 400 | 552 |
| S' (cm$^2$) | 204 | 347 | 441 |
| △S (S-S') | 16 | 53 | 111 |
| △S/S (%) | 7.3 | 13.3 | 20.1 |

From Table 18 and FIG. 21, it can be understood that the amount the gas stagnation increases as the height of the plate increases, and a large difference occurs between the effective plate area S' and the actual plate area S.

«Lead-acid batteries E39 to E41»

The batteries E39, E40, and E41 are prepared in the same manner as the batteries R14, R16 and R18, except that, in the preparation of the negative electrode plate, the condensate A is used instead of the sodium lignin sulfonate as the organic expander, and the negative electrode material density after formation is changed to 2.9 g/cm$^3$.

Table 19 shows the capacity retention ratios of batteries R49, R50 and R51 and the batteries E39, E40 and E41 at the 200th cycle in comparison.

[Table 19]

| Battery | R49/E39 | R50/E40 | R51/E41 |
|---|---|---|---|
| H (mm) | 164 | 278 | 384 |
| First Rib at 200th Cycle | 89.4% | 84.2% | 81.4% |
| Ribs on Both Sides at 200th Cycle | 94.0% | 92.2% | 91.6% |

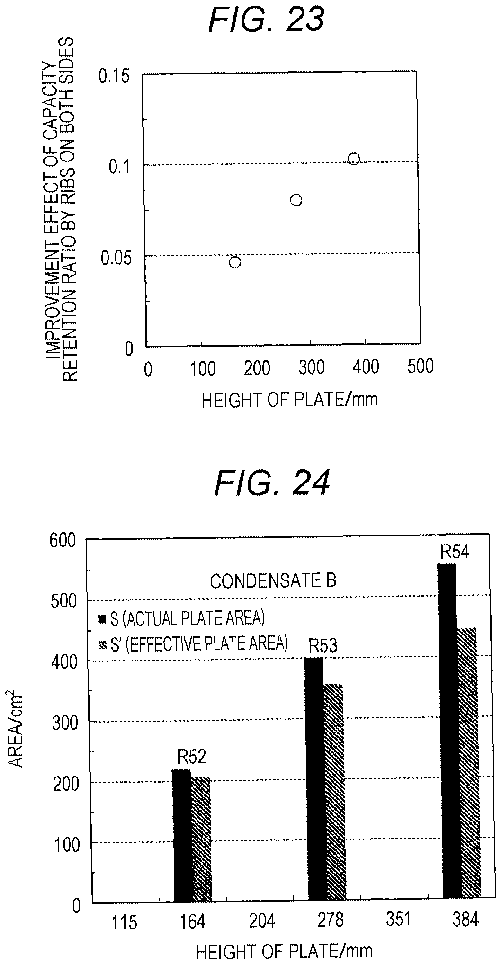

FIG. 22 shows the relation between the height of the plate using the condensate A and the capacity retention ratio at the 200th cycle. FIG. 23 shows the relation between the height of the plate using the condensate A and the improvement range of the capacity retention ratio due to the ribs on both sides in comparison. From FIGS. 22 and 23, it can be understood that the battery having the first rib and the second rib on both sides of the separator has a significantly improved capacity retention ratio at the 200th cycle as compared with the battery having the first rib only on the positive electrode plate side, and the improvement range becomes more remarkable as the height of the plate increases.

«Lead-acid batteries R52 to R54»

The batteries R52, R53, and R54 are prepared in the same manner as the batteries R9, R1 and R12, except that, in the preparation of the negative electrode plate, the condensate B is used instead of the sodium lignin sulfonate as the organic expander, and the negative electrode material density after formation is changed to 2.9 g/cm$^3$.
Condensate B: Condensate of bisphenol S compound and phenol sulfonic acid with formaldehyde (sulfur element content: 4000 $\mu$mol/g, Mw = 8000)

Table 20 and FIG. 24 show the relation between the height H of the plate using the condensate B, the effective plate area S' at the 200th cycle, and the actual plate area S (height of the plate × width of the plate).

[Table 20]

| Battery | R52 | R53 | R54 |
|---|---|---|---|
| Condensate | B | B | B |
| NAM Density (g/cm$^3$) | 2.9 | 2.9 | 2.9 |
| Disposition of Rib | Positive Electrode Side | Positive Electrode Side | Positive Electrode Side |
| H (mm) | 164 | 278 | 384 |
| S (cm$^2$) | 220 | 400 | 552 |
| S' (cm$^2$) | 207 | 356 | 446 |

(continued)

| Battery | R52 | R53 | R54 |
|---|---|---|---|
| ΔS (S-S') | 13 | 44 | 106 |
| ΔS/S (%) | 5.9 | 11.0 | 19.2 |

From Table 20 and FIG. 24, it can be understood that the amount the gas stagnation increases as the height of the plate increases, and a large difference occurs between the effective plate area S' and the actual plate area S.

«Lead-acid batteries E42 to E44»

The batteries E42, E43, and E44 are prepared in the same manner as the batteries R14, R16 and R18, except that, in the preparation of the negative electrode plate, the condensate B is used instead of the sodium lignin sulfonate as the organic expander, and the negative electrode material density after formation is changed to 2.9 g/cm³.
Table 21 shows the capacity retention ratios of batteries R52, R53 and R54 and the batteries E42, E43 and E44 at the 200th cycle in comparison.

[Table 21]

| Battery | R52/E42 | R53/E43 | R54/E44 |
|---|---|---|---|
| H (mm) | 164 | 278 | 384 |
| First Rib at 200th Cycle | 88.8% | 83.8% | 80.9% |
| Ribs on Both Sides at 200th Cycle | 93.5% | 91.6% | 90.4% |

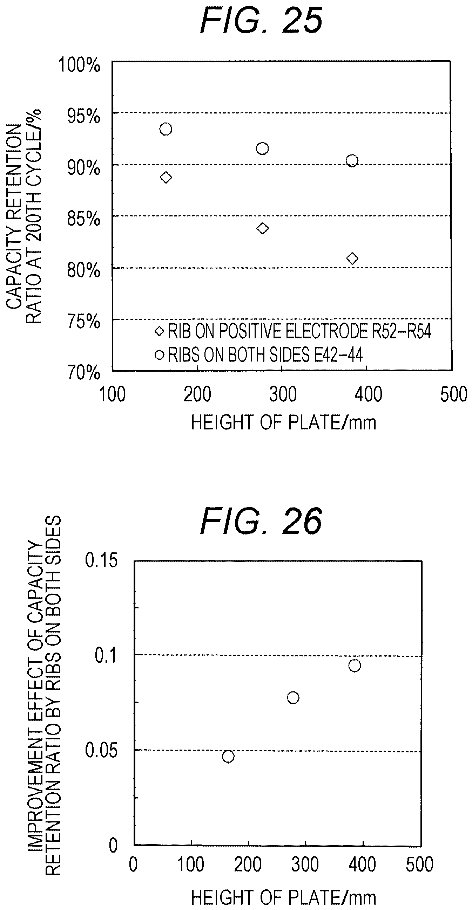

FIG. 25 shows the relation between the height of the plate using the condensate B and the capacity retention ratio at the 200th cycle. FIG. 26 shows the relation between the height of the plate using the condensate B and the improvement range of the capacity retention ratio due to the ribs on both sides in comparison. From FIGS. 25 and 26, it can be understood that the battery having the first rib and the second rib on both sides of the separator has a significantly improved capacity retention ratio at the 200th cycle as compared with the battery having the first rib only on the positive electrode plate side, and the improvement range becomes more remarkable as the height of the plate increases.

«Lead-acid batteries R55 to R57»

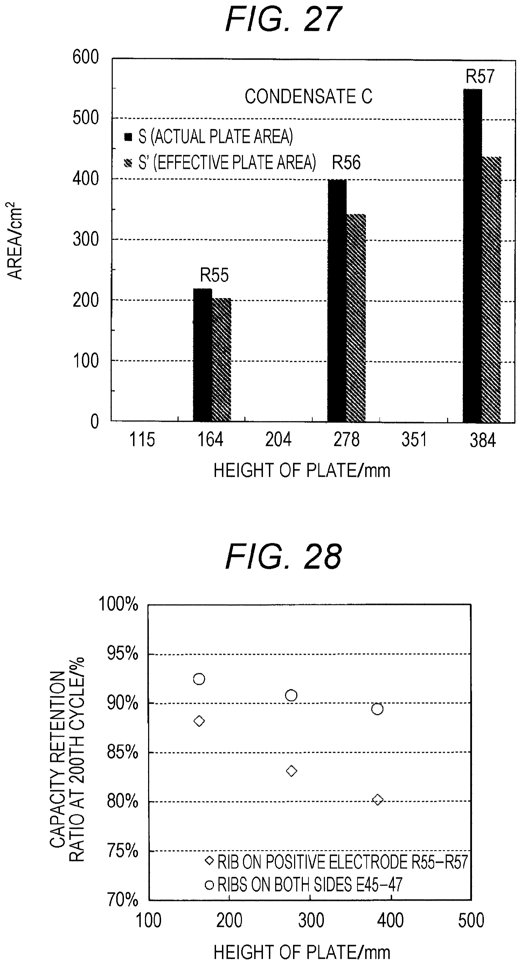

The batteries R55, R56, and R57 are prepared in the same manner as the batteries R9, R1 and R12, except that, in the preparation of the negative electrode plate, the condensate C is used instead of the sodium lignin sulfonate as the organic expander, and the negative electrode material density after formation is changed to 2.9 g/cm³.
Condensate C: Condensate of bisphenol A compound with sulfonic acid group introduced and phenol sulfonic acid with formaldehyde (sulfur element content: 3970 μmol/g, Mw = 8000)
Table 22 and FIG. 27 show the relation between the height H of the plate using the condensate C, the effective plate area S' at the 200th cycle, and the actual plate area S (height of the plate × width of the plate).

[Table 22]

| Battery | R55 | R56 | R57 |
|---|---|---|---|
| Condensate | C | C | C |
| NAM Density (g/cm³) | 2.9 | 2.9 | 2.9 |
| Disposition of Rib | Positive Electrode Side | Positive Electrode Side | Positive Electrode Side |
| H (mm) | 164 | 278 | 384 |
| S (cm²) | 220 | 400 | 552 |
| S' (cm²) | 204 | 344 | 440 |
| ΔS (S-S') | 16 | 56 | 112 |
| ΔS/S (%) | 7.3 | 14.0 | 20.3 |

**EP 3 840 092 A1**

From Table 22 and FIG. 27, it can be understood that the amount the gas stagnation increases as the height of the plate increases, and a large difference occurs between the effective plate area S' and the actual plate area S.

«Lead-acid batteries E45 to E47»

The batteries E45, E46, and E47 are prepared in the same manner as the batteries R14, R16 and R18, except that, in the preparation of the negative electrode plate, the condensate C is used instead of the sodium lignin sulfonate as the organic expander, and the negative electrode material density after formation is changed to 2.9 g/cm$^3$.

Table 23 shows the capacity retention ratios of batteries R55, R56 and R57 and the batteries E45, E46 and E47 at the 200th cycle in comparison.

[Table 23]

| Battery | R55/E45 | R56/E46 | R57/E47 |
|---|---|---|---|
| H (mm) | 164 | 278 | 384 |
| First Rib at 200th Cycle | 88.2% | 83.1% | 80.2% |
| Ribs on Both Sides at 200th Cycle | 92.5% | 90.8% | 89.4% |

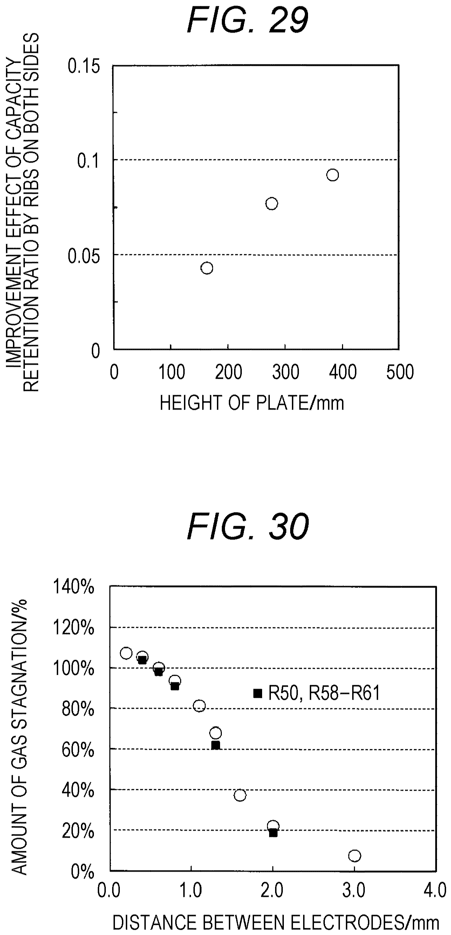

FIG. 28 shows the relation between the height of the plate using the condensate C and the capacity retention ratio at the 200th cycle. FIG. 29 shows the relation between the height of the plate using the condensate C and the improvement range of the capacity retention ratio due to the ribs on both sides in comparison. From FIGS. 28 and 29, it can be understood that the battery having the first rib and the second rib on both sides of the separator has a significantly improved capacity retention ratio at the 200th cycle as compared with the battery having the first rib only on the positive electrode plate side, and the improvement range becomes more remarkable as the height of the plate increases.

«Lead-acid batteries R58 to R61»

The batteries R58 to R61 are prepared in the same manner as the battery R1 which has a plate with a height of 278 mm, except that the distance between the electrodes is changed as shown in Table 24, and in the preparation of the negative electrode plate, the condensate A is used instead of the sodium lignin sulfonate as the organic expander, and the negative electrode material density after formation was 2.9 g/cm$^3$. Then, the amount of gas stagnation is measured according to Evaluation 1.

Table 24 shows the relative gas stagnation amount with the battery R1 having a distance between electrodes of 0.6 mm as 100%. Furthermore, FIG. 30 shows a ■ plot of the relation between the distance between the electrodes and the amount of gas stagnation when the height of the plate using the condensate A is 278 mm. In the figure, the ○ plots are the plots of R1 and R22 to R29 in Table 13.

[Table 24]

| Battery | NAM Density (g/cm$^3$) | Battery | NAM Density (g/cm$^3$) | Distance Between Electrodes (mm) | Relative Value (R50, 58-61) | Relative Value (R1, 22-29) |
|---|---|---|---|---|---|---|
| - | - | R22 | 3.7 | 0.2 | - | 107% |
| R58 | 2.9 | R23 | 3.7 | 0.4 | 104% | 105% |
| R50 | 2.9 | R1 | 3.7 | 0.6 | 98% | 100% |
| R59 | 2.9 | R24 | 3.7 | 0.8 | 91% | 94% |
| - | - | R25 | 3.7 | 1.1 | - | 81% |
| R60 | 2.9 | R26 | 3.7 | 1.3 | 62% | 68% |
| - | - | R27 | 3.7 | 1.6 | - | 37% |
| R61 | 2.9 | R28 | 3.7 | 2.0 | 19% | 22% |
| - | - | R29 | 3.7 | 3.0 | - | 8% |

31

From Table 24 and FIG. 30, it can be understood that when the distance between the electrodes is smaller than 1.3 mm, gas stagnation becomes significant even when a condensate is used. That is, it can be understood that the gas stagnation cannot be eliminated only by using the condensate as the organic expander, and it is necessary to use the separator having the ribs on both sides.

The lead-acid battery according to the present invention is mainly suitable for a liquid type lead-acid battery, and is suitable as a power supply such as a power supply for starting automobiles and motorcycles, and a power supply for industrial energy storage apparatuses, i.e., an electric car or electric vehicle such as a forklift.

**Claims**

1.   A lead-acid battery comprising:

a positive electrode plate;
a negative electrode plate;
an electrolyte solution;
a separator interposed between the positive electrode plate and the negative electrode plate; and
wherein the negative electrode plate includes a negative electrode current collector and a negative electrode material,
the negative electrode material has a density of 3.5 g/cm$^3$ or less,
the negative electrode material contains an organic condensate, and
the separator has a first rib on a first surface on a positive electrode plate side and a second rib on a second surface on a negative electrode plate side.

2.   The lead-acid battery according to claim 1,
wherein the organic condensate contains a unit of an aromatic compound, and
the aromatic compound has a sulfur-containing group.

3.   The lead-acid battery according to claim 2, wherein the aromatic compound contains at least one kind selected from the group consisting of a bisallene compound and a monocyclic compound.

4.   The lead-acid battery according to claim 3, wherein the bisallene compound contains a bisphenol compound.

5.   The lead-acid battery according to claim 3 or 4, wherein the monocyclic compound contains a hydroxyallene compound.

6.   The lead-acid battery according to any one of claims 1 to 5, wherein a sulfur element content in the organic condensate is 2000 $\mu$mol/g or more.

7.   The lead-acid battery according to any one of claims 1 to 6, wherein a content of the organic condensate in the negative electrode material is 0.03% by mass or more and 0.3% by mass or less.

8.   The lead-acid battery according to any one of claims 1 to 7, wherein a height of the positive electrode plate and a height of the negative electrode plate are 160 mm or more, respectively.

9.   The lead-acid battery according to any one of claims 1 to 7, wherein the height of the positive electrode plate and the height of the negative electrode plate are 200 mm or more, respectively.

10.   The lead-acid battery according to any one of claims 1 to 7, wherein the height of the positive electrode plate and the height of the negative electrode plate are 270 mm or more, respectively.

11.   The lead-acid battery according to any one of claims 1 to 10, wherein a distance between the positive electrode plate and the negative electrode plate is 1.3 mm or less.

12.   The lead-acid battery according to any one of claims 1 to 10, wherein the distance between the positive electrode plate and the negative electrode plate is 1.0 mm or less.

13.   The lead-acid battery according to any one of claims 1 to 12, wherein a height of the first rib and a height of the second rib are 0.1 mm or more, respectively.

14. The lead-acid battery according to any one of claims 1 to 13, wherein the height of the second rib is 10% to 70% of a total thickness of the separator.

# FIG. 1

# FIG. 2A

# FIG. 2B

## FIG. 3

## FIG. 4

## FIG. 5

- ◆— CAPACITY RETENTION RATIO R1 (3.7g/cm³/LIGNIN)

- ■-- CAPACITY RETENTION RATIO R2 (2.9g/cm³/LIGNIN)

- ●·· CAPACITY RETENTION RATIO E1 (2.9g/cm³/CONDENSATE A/ RIBS ON BOTH SIDES)

## FIG. 6

# FIG. 7

# FIG. 8

## FIG. 9

## FIG. 10

## FIG. 11

## FIG. 12

# FIG. 13

## FIG. 14

## FIG. 15

## FIG. 16

■ UPPER PART  ⊠ MIDDLE PART  ◩ LOWER PART

| DISPOSITION OF RIB IN SEPARATOR | | 164 | | 204 | | 278 | | 351 | | 384 |
|---|---|---|---|---|---|---|---|---|---|---|
| | POSITIVE ELECTRODE | BOTH SIDES | POSITIVE ELECTRODE | BOTH SIDES | POSITIVE ELECTRODE | BOTH SIDES | POSITIVE ELECTRODE | BOTH SIDES | POSITIVE ELECTRODE | BOTH SIDES |
| HEIGHT OF PLATE (mm) | R9/R14 | | R10/R15 | | R1/R16 | | R11/R17 | | R12/R18 | |

Y-axis: AMOUNT OF LEAD SULFATE ACCUMULATED AFTER 600 CYCLES

EP 3 840 092 A1

## FIG. 17

## FIG. 18

## FIG. 19

HEIGHT OF PLATE: 384mm

R12, R38−R45

Y-axis: AMOUNT OF GAS STAGNATION/%
X-axis: DISTANCE BETWEEN ELECTRODES/mm

## FIG. 20

R16    DISTANCE BETWEEN ELECTRODES: 0.6mm
       DISTANCE BETWEEN ELECTRODES: 1.3mm
       DISTANCE BETWEEN ELECTRODES: 2mm
       DISTANCE BETWEEN ELECTRODES: 3mm

R46

R47

R48

Y-axis: LOW-TEMPERATURE HR DISCHARGE PERFORMANCE AT 300 CYCLES (%)
X-axis: DISTANCE BETWEEN ELECTRODES
0.6mm    1.3mm    2mm    3mm

## FIG. 21

## FIG. 22

## FIG. 23

## FIG. 24

## FIG. 25

Legend:
◇ RIB ON POSITIVE ELECTRODE R52–R54
○ RIBS ON BOTH SIDES E42–44

Y-axis: CAPACITY RETENTION RATIO AT 200TH CYCLE/%
X-axis: HEIGHT OF PLATE/mm

## FIG. 26

Y-axis: IMPROVEMENT EFFECT OF CAPACITY RETENTION RATIO BY RIBS ON BOTH SIDES
X-axis: HEIGHT OF PLATE/mm

# FIG. 27

# FIG. 28

## FIG. 29

Y-axis: IMPROVEMENT EFFECT OF CAPACITY RETENTION RATIO BY RIBS ON BOTH SIDES (0, 0.05, 0.1, 0.15)

X-axis: HEIGHT OF PLATE/mm (0, 100, 200, 300, 400, 500)

## FIG. 30

Y-axis: AMOUNT OF GAS STAGNATION/% (0%, 20%, 40%, 60%, 80%, 100%, 120%, 140%)

X-axis: DISTANCE BETWEEN ELECTRODES/mm (0.0, 1.0, 2.0, 3.0, 4.0)

■ R50, R58–R61

Europäisches
Patentamt

European
Patent Office

Office européen
des brevets

# EUROPEAN SEARCH REPORT

Application Number

EP 20 21 5691

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 389 131 A1 (HITACHI CHEMICAL CO LTD [JP]) 17 October 2018 (2018-10-17) * paragraphs [0011], [0012], [0045] - [0054], [0071], [0074], [0086], [0087] * <br> * claims 1-4, 15 * | 1-14 | INV. H01M4/62 H01M10/06 H01M10/08 H01M50/463 H01M4/02 |
| A | EP 2 571 091 A1 (SHIN KOBE ELECTRIC MACHINERY [JP]) 20 March 2013 (2013-03-20) * abstract * <br> * paragraphs [0012], [0013], [0037] - [0041], [0078] - [0081], [0086] - [0089], [0108] * <br> * claims 1, 3, 4 * | 1-14 | |

TECHNICAL FIELDS
SEARCHED       (IPC)

H01M

The present search report has been drawn up for all claims

| Place of search | Date of completion of the search | Examiner |
|---|---|---|
| Munich | 3 May 2021 | Riederer, Florian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 21 5691

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2021

| Patent document cited in search report | | Publication date | Patent family member(s) | | Publication date |
|---|---|---|---|---|---|
| EP 3389131 | A1 | 17-10-2018 | CN | 108370070 A | 03-08-2018 |
| | | | EP | 3389131 A1 | 17-10-2018 |
| | | | JP | 6354913 B2 | 11-07-2018 |
| | | | JP | 2018139230 A | 06-09-2018 |
| | | | JP | WO2017099144 A1 | 07-06-2018 |
| | | | WO | 2017098665 A1 | 15-06-2017 |
| | | | WO | 2017099144 A1 | 15-06-2017 |
| EP 2571091 | A1 | 20-03-2013 | AU | 2011251536 A1 | 20-12-2012 |
| | | | BR | 112012028803 A2 | 26-07-2016 |
| | | | CN | 102893445 A | 23-01-2013 |
| | | | CN | 108630900 A | 09-10-2018 |
| | | | EP | 2571091 A1 | 20-03-2013 |
| | | | EP | 3288107 A1 | 28-02-2018 |
| | | | JP | 5783170 B2 | 24-09-2015 |
| | | | JP | WO2011142072 A1 | 22-07-2013 |
| | | | KR | 20130062929 A | 13-06-2013 |
| | | | RU | 2012153159 A | 20-06-2014 |
| | | | US | 2013099749 A1 | 25-04-2013 |
| | | | WO | 2011142072 A1 | 17-11-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017063001 A